# EUROPEAN PATENT APPLICATION

(11) **EP 4 703 831 A1**
(43) Date of publication of application: **04.03.2026**
(21) Application number: 25198519.8
(22) Date of filing: 27.08.2025
(51) Int. Cl.: G05D 1/242, G05D 1/243, G05D 1/435, G05D 1/622, G05D 105/28, G05D 107/70, G05D 109/10

(54) **SYSTEM AND METHOD FOR FACILITATING THE AUTONOMOUS NAVIGATION OF A UTILITY AND DELIVERY CART**

(30) Priority: 27.08.2024 US 202418816563; 22.08.2025 US 202519307174
(71) Applicant: Quasi, Inc., Frederick MD 21703 (US)
(72) Inventor: LEBEDEV, Vladimir, Ljamsville, 21754 (US)
(74) Representative: Murgitroyd & Company

(57) **Abstract**

A system and a method for facilitating the autonomous navigation of a utility and delivery cart implements new means for a motorized cart to operate in different environments under specific operational conditions. The system includes a structural frame, a controller, a plurality of navigational sensors, a portable power source, a pair of caster wheels, and a pair of motorized wheels. The structural frame corresponds to the main structure of the system that can be customized to carry different payloads and accommodate different accessories. The pair of caster wheels and the pair of motorized wheels enable the movement of the structural frame. The controller and the plurality of navigational sensors allow the autonomous operation of the pair of motorized wheels under specific operational configurations. The portable power source provides the power necessary for the operation of the controller, the plurality of navigational sensors, and the pair of motorized wheels.

## Description

### FIELD OF THE INVENTION

The present invention relates generally to transportation devices and autonomous systems, and more particularly, to systems and methods for facilitating the safe and efficient autonomous navigation of a utility and delivery cart within an operational environment.

### BACKGROUND OF THE INVENTION

A wide variety of autonomous robotic delivery carts are used in manufacturing, warehouses, datacenters, points of sale, and distribution applications. Known autonomous robotic carts have been known to suffer from inflexible, rigid designs that inhibit customization, are expensive to manufacture, and require people to load and unload payloads.

Known rigid robotic delivery cart designs have been known to inhibit customization which prevents modifying carts to operate outside of narrow intended use cases. Redesigning such robotic carts for different use cases and/or to accommodate different payloads is typically time consuming and expensive because a whole new robotic cart is designed from scratch. Redesigning robotic carts typically includes completely reprogramming the cart as well as navigational and operational software stacks.

Generally, manufacturing robotic delivery carts with such inflexible and rigid designs is expensive because custom parts for the cart frame, the cart enclosure, and mounts for all the hardware that enable autonomous operation need to be manufactured. Furthermore, many components required for autonomous operation need to be integrated into the robotic cart, for example, proximity sensors, power supply, control sensors, drive systems, warning systems, and user controls. These components and the associated wiring are included in the robotic cart and the locations are hardcoded in the software that runs the cart.

Known robotic delivery cart designs also typically lack adequate sensing systems for navigating in crowded and tight spaces. Such robotic carts may include few, for example, sixteen or less infrared or ultrasonic sensors to measure the distance to obstacles during navigation that are queried by a central processing unit a few times per second.

Additionally, known robotic delivery carts require users, for example, employees to manually load payloads onto the cart and unload the payloads from the cart. Loading and unloading the payloads may be time intensive, which can cause the user to delay or miss performing other more important tasks. As a result, users are known to be less efficient which increases costs and perhaps causes delayed or missed project deadlines.

Known mobile robotic carts are typically programmed manually, are loaded and unloaded by users, and cannot interact with building infrastructure. As a result, known carts can be cumbersome and time consuming to operate which causes their operating costs to increase. In view of the above, it can be seen that there is a need for an improved autonomous mobile robotic cart that is customizable, adaptable to different environments, and can better operate under different operational conditions.

Thus, it would be advantageous and an improvement over the relevant technology to provide a customizable mobile robotic cart capable of operating autonomously to facilitate reducing manufacturing costs, and to provide a method for transporting objects using the robotic cart to facilitate reducing the time and related costs of operating robotic carts.

### BRIEF DESCRIPTION OF THE INVENTION

The present invention discloses a system and a method for facilitating the autonomous navigation of a utility and delivery cart. The present invention features different autonomous modes of operation, automatically avoids obstacles, tracks position in an internal area map, executes complex navigation behaviors, warns when unsafe operating conditions occur, and may be connected to a network. The present invention includes an autonomous navigation system, and a propulsion system integrated into a structural frame constructed from industry standard Aluminum extrusions. The structural frame can be easily modified to any specified dimensions and configurations for specific operational requirements (e.g., width, length, height, number of shelves, etc.). The present invention can be quickly and precisely changed to specific sizes, payloads, and other requirements of the customer. Further, the navigation and propulsion systems can include, but are not limited to, two integrated wheels/hub electric motors, a motor control unit, an internal battery, a battery charging port, a stereo vision camera, a Light Detection and Ranging (LiDAR) unit, an array of ultrasonic sensors, a touchscreen for user interactions, etc.

Further, the structural frame of the present invention utilizes different Aluminum extrusions including, but not limited to, 4040 extrusions for the corner posts of the structural frame, 2040 extrusions for the shelf holders, etc. The use of Aluminum extrusions allow inexpensive sourcing of such materials and allow the implementation of standard assembling methods using the corresponding fasteners. The shelf panels can also be made from Aluminum composite panels (ACP) that are designed to be used with Aluminum extrusions and can also be cut to specific sizes. Further, the overall configuration of the present invention (i.e., width, length, height, number of shelfs, shelf configurations, number of shelfs, etc.) can be stored in a single Extensible Markup Language (XML) file in the integrated controller which can be used to calculate, plan, and execute autonomous navigation maneuvers. Furthermore, the present invention can include a navigation system with completely different Time of Flight (TOF) sensors that features a total of 1024 infrared beams and dedicated microcontrollers to control these sensors at a resolution of 30 times per second. The proposed infrared array requires 1.5 or less the width of the present invention to operate, thus enabling maneuvering in very tight spaces. Additional features and benefits of the present invention are further discussed in the sections below.

Accordingly there is provided a method and a robotic cart as detailed in the claims that follow.

### BRIEF DESCRIPTION OF THE DRAWINGS

Figure 1 is a top-front-left perspective view of an example robotic delivery cart according to an embodiment of the present disclosure.
Figure 2 is a top-rear-left perspective view of the system of the example robotic delivery cart.
Figure 3 is a bottom-front-left perspective view of the robotic delivery cart.
Figure 4 is a bottom-rear-left perspective view of the robotic delivery cart.
Figure 5 is a right-side view of the robotic delivery cart.
Figure 6 is a top-rear-right perspective view of the robotic delivery cart.
Figure 7 is a bottom-front-right perspective view of the robotic delivery cart.
Figure 8 is a top-rear-right exploded perspective view of the robotic delivery cart.
Figure 9 is a top-front-right perspective view of the system of the robotic delivery cart, wherein several arrangements of the structural frame are shown.
Figure 10 is a top-rear-right exploded perspective view of the structural frame of the robotic delivery cart.
Figure 11 is a magnified view of the connection between a support rail and a shelf of the robotic delivery cart.
Figure 12 is a top-front-right perspective view of the electronics housing of the robotic delivery cart.

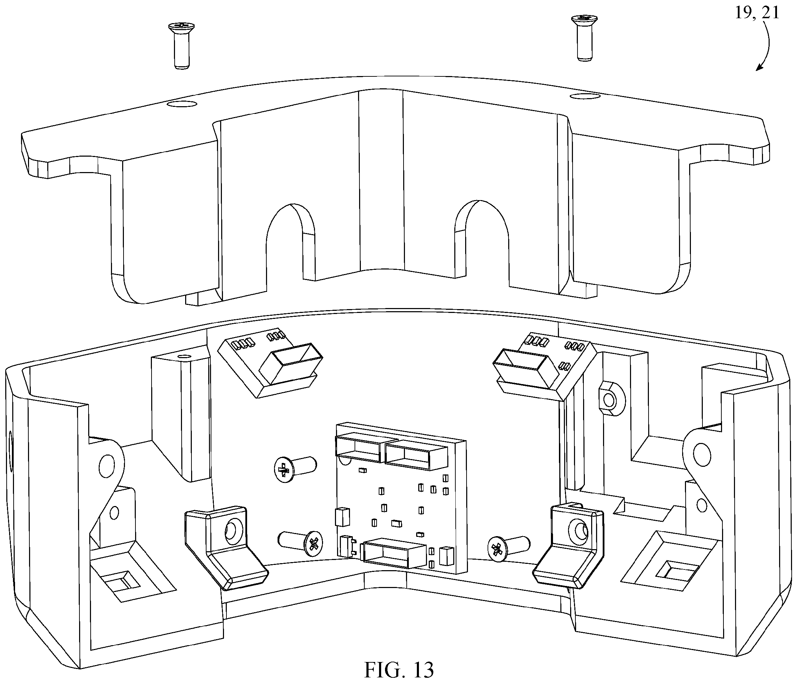

Figure 13 is a top exploded perspective view of a lower Time-of-Flight (TOF) sensor of the robotic delivery cart.

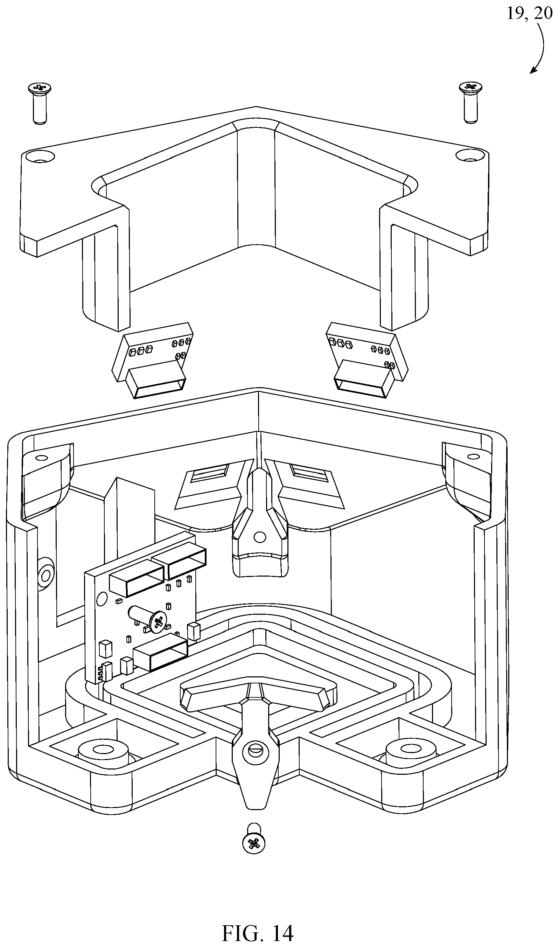

Figure 14 is a top exploded perspective view of an upper TOF sensor of the robotic delivery cart.
Figure 15 is a top exploded perspective view of an image capturing device of the robotic delivery cart.
Figure 16 is a schematic view of the lower TOF sensor coverage of the robotic delivery cart.
Figure 17 is a schematic view of the upper TOF sensor coverage of the robotic delivery cart.
Figure 18 is a schematic view of the light detection and ranging (LiDAR) sensor coverage of the robotic delivery cart.
Figure 19 is a schematic view of the structure of a motorized wheel of the robotic delivery cart.
Figure 20 is a schematic view of the electronic connections and the electrical connections of the robotic delivery cart, wherein the electronic connections are shown in dashed lines, and wherein the electrical connections are shown in solid lines.
Figure 21 is a schematic view of the software application of the robotic delivery cart, wherein the waypoints feature of the software application is shown.
Figure 22 is a schematic view of the software application of the robotic delivery cart, wherein the area map feature of the software application is shown.
Figure 23 is a schematic view of the software application of the robotic delivery cart, wherein the navigation feature of the software application is shown.
Figure 24 is a schematic view of the software application of the robotic delivery cart, wherein the settings feature of the software application is shown.
Figure 25 is a schematic view of the software application of the robotic delivery cart, wherein a mobile version of the waypoints feature is shown.
Figure 26 is a block diagram illustrating an example controller for use in operating the robotic delivery cart.
Figure 27 is a perspective view of the robotic delivery cart, further including an example robotic arm.
Figure 28 is an enlarged perspective view of an example gripper included in the robotic arm.
Figure 29 is an enlarged perspective view of the example gripper grasping an object.
Figure 30 is a perspective view of the cart including the robotic arm autonomously moving objects from a table to the cart.
Figure 31 is a perspective view of the robotic delivery cart with the robotic arm in a retracted position, further including another example image capturing device.
Figure 32 is a perspective view of an alternative example gripper.
Figure 33 is a perspective view of the cart and the robotic arm located proximate an elevator.
Figure 34 is a perspective view of the cart located in the elevator.
Figure 35 is a perspective view of the cart including navigational sensors at locations on a base shelf of the cart.
Figure 36 is a flowchart illustrating an example method and algorithm for enhancing transportation of objects using the robotic delivery cart.
Figure 37 is a flowchart illustrating an example method and algorithm for the cart to operate an elevator.
Figure 38 is a perspective view of an example electric charging station for charging an internal battery of the robotic delivery cart.
Figure 39 is a perspective view of the example charging station with the wheels of the robotic delivery cart positioned in respective channels of the charging station.

### DETAILED DESCRIPTION OF THE INVENTION

The following detailed description is made with reference to the accompanying drawings and is provided to assist in a comprehensive understanding of various example embodiments of the present disclosure. The following description includes various details to assist in that understanding, but these are to be regarded merely as examples and not for the purpose of limiting the present disclosure as defined by the appended claims and their equivalents. The words and phrases used in the following description are merely used to enable a clear and consistent understanding of the present disclosure. In addition, descriptions of well-known structures, functions, and configurations may have been omitted for clarity and conciseness. Those of ordinary skill in the art will recognize that various changes and modifications of the example embodiments described herein can be made without departing from the spirit and scope of the present disclosure.

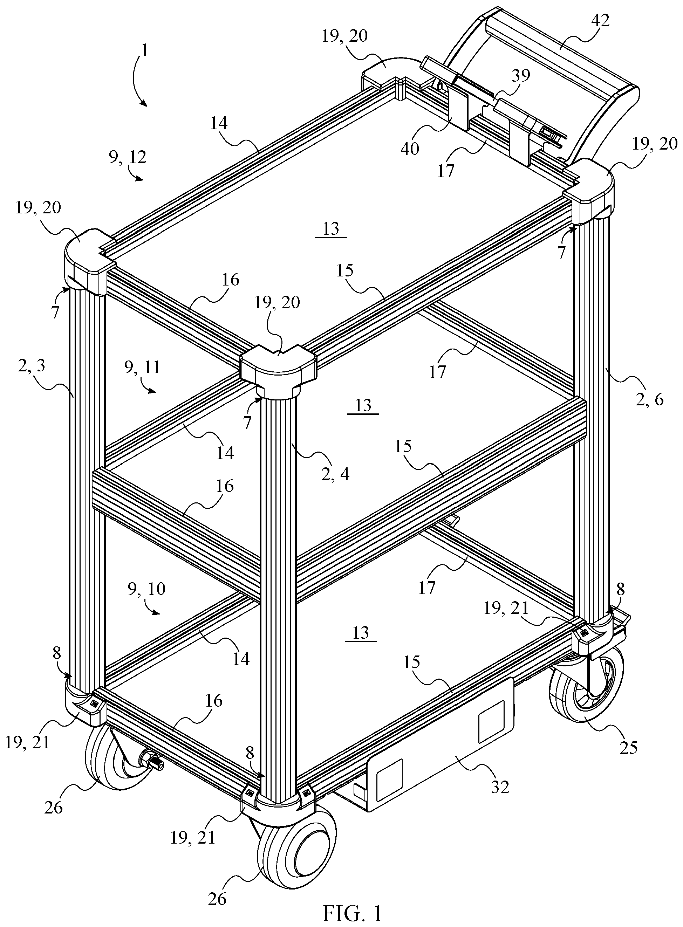

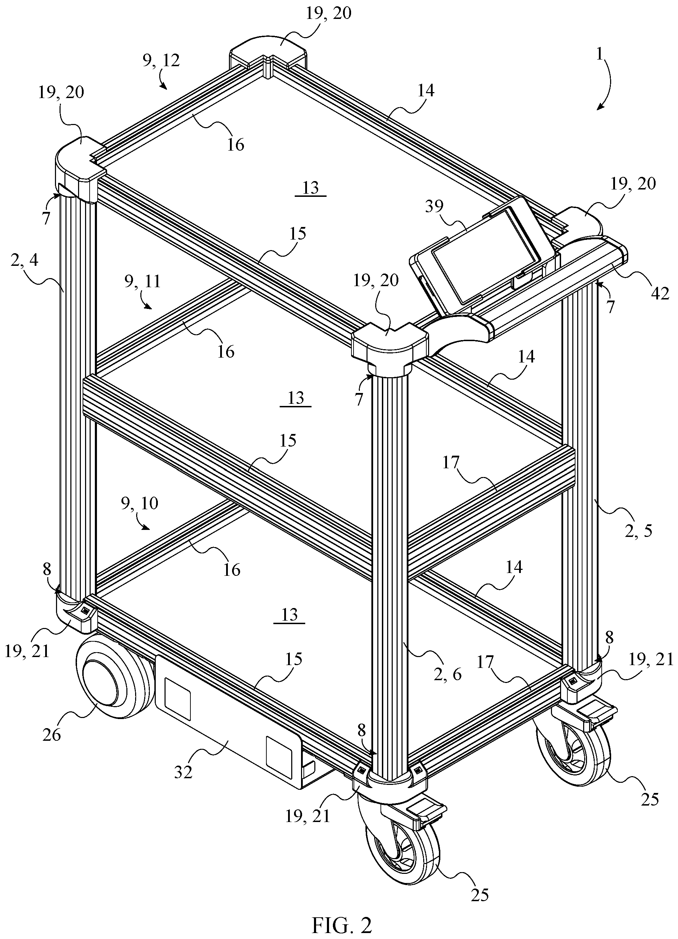

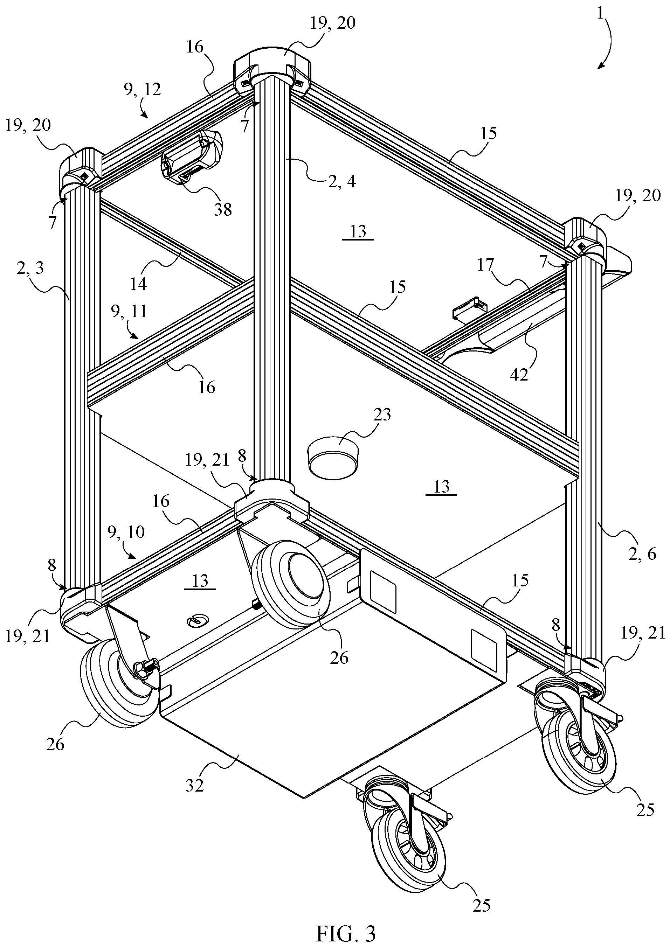

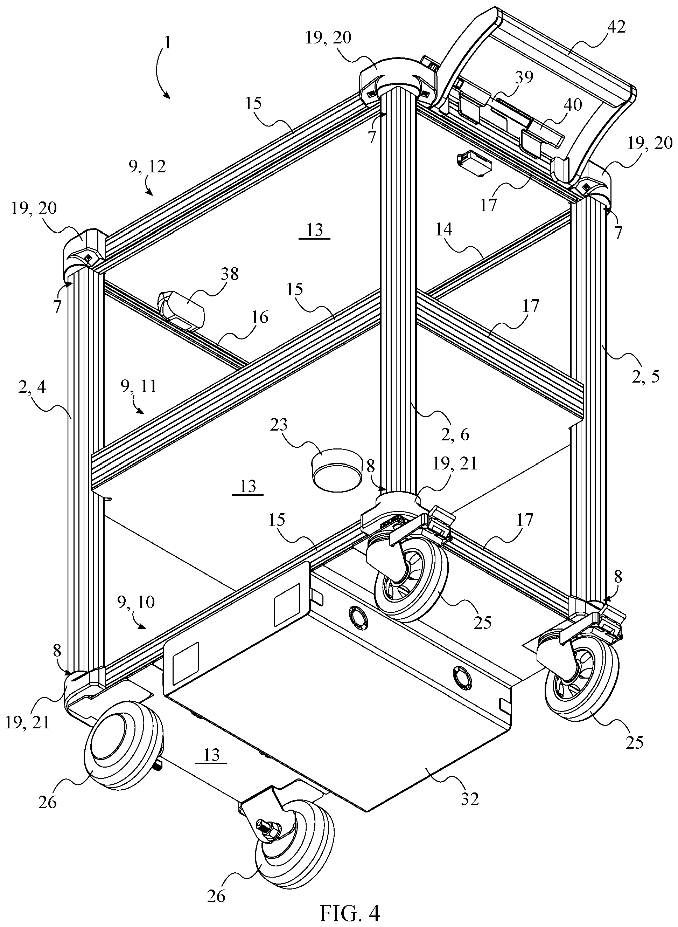

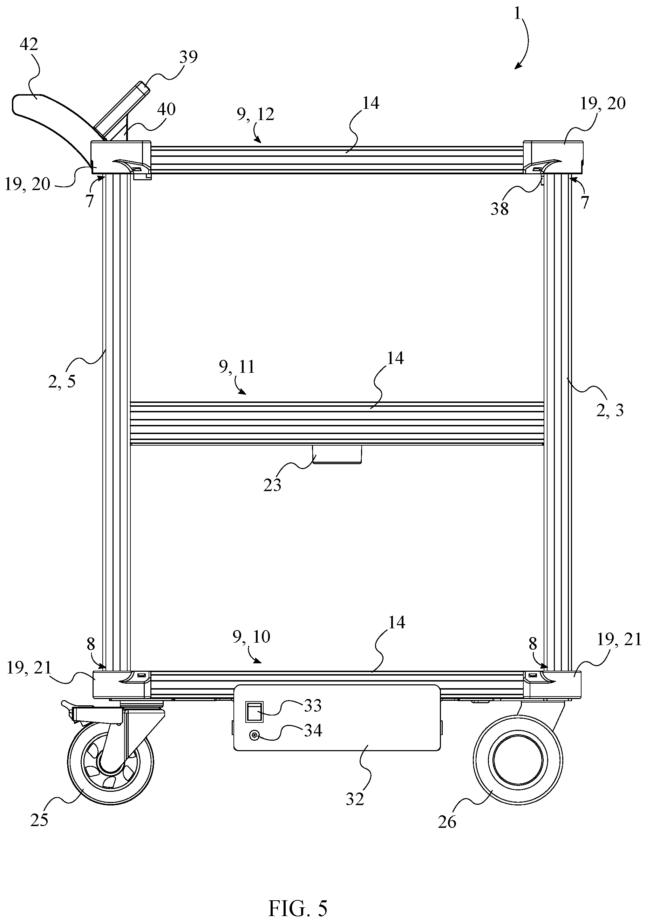

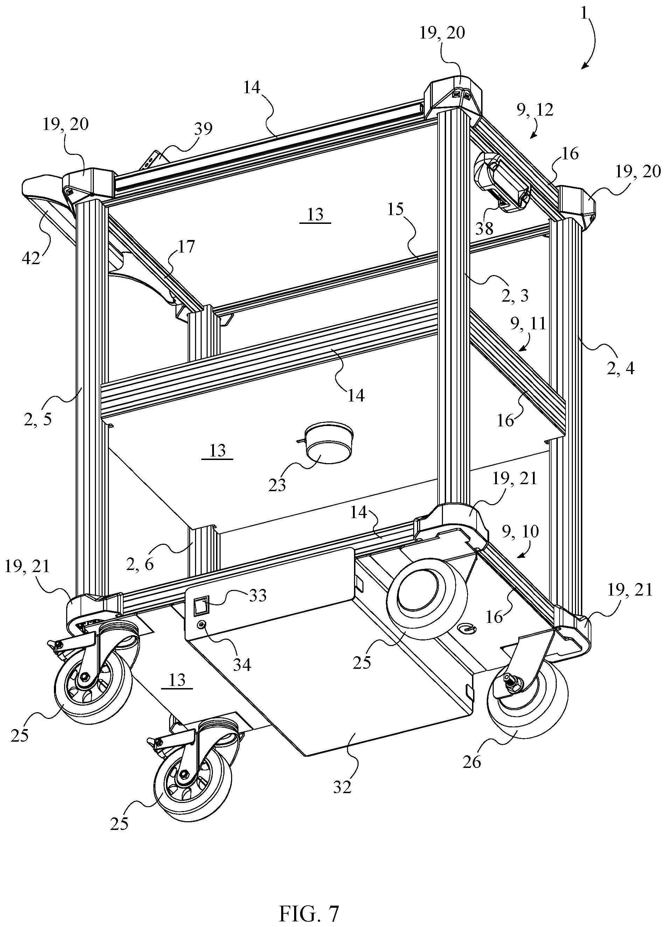

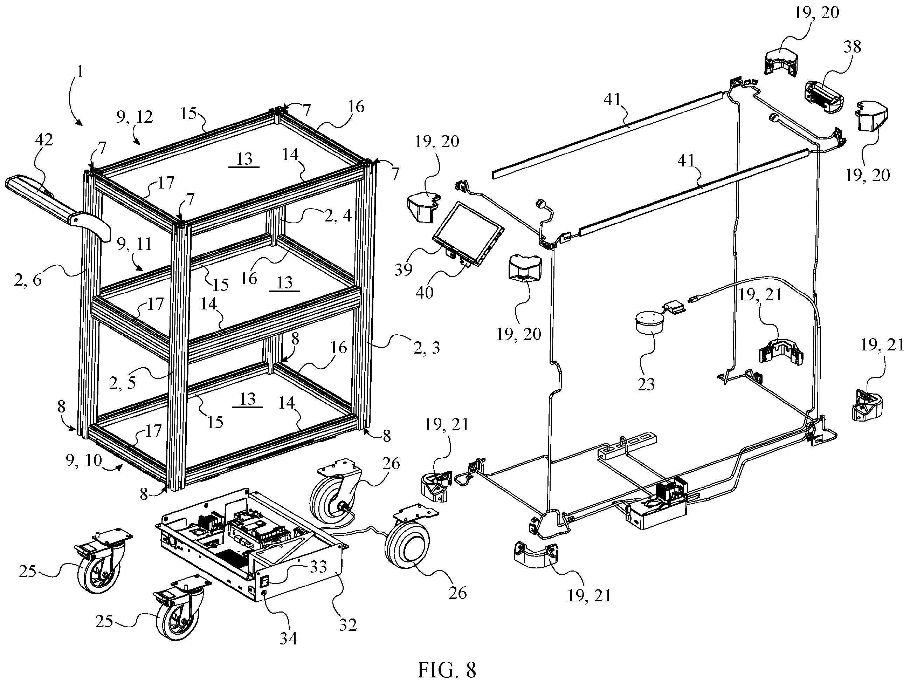

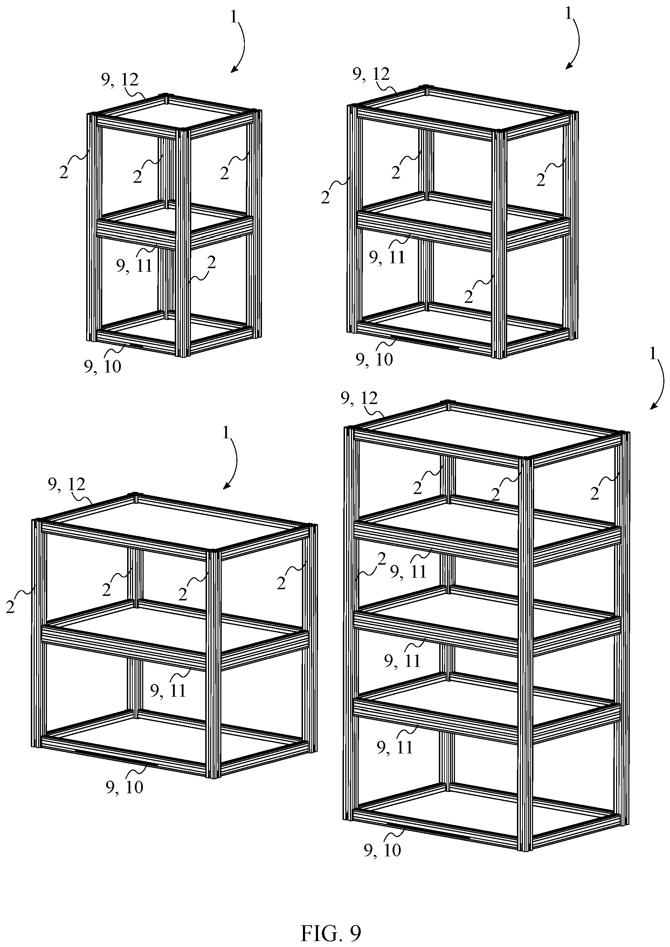

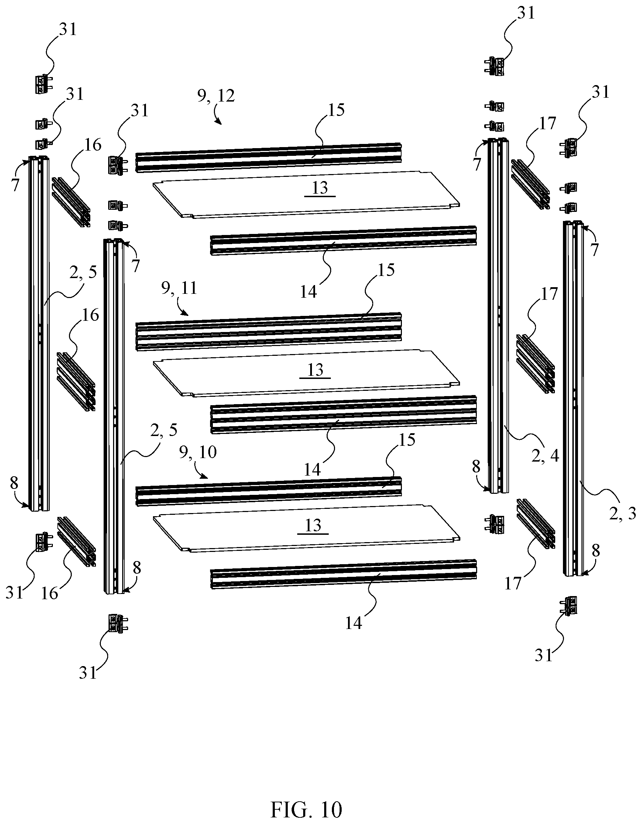

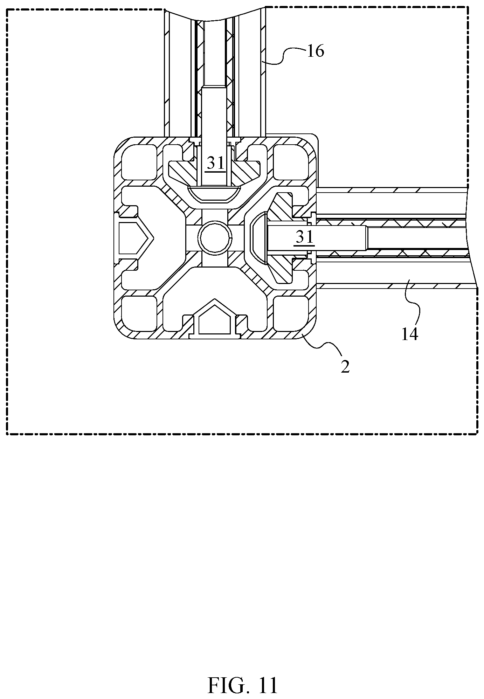

The present disclosure describes a robotic delivery cart and a method for facilitating the autonomous navigation of the delivery cart. The present disclosure describes a cart for delivery applications that can be easily customized to operate in different environments under specific operating conditions. As can be seen in Figures 1 through 12 and 20, a example robotic delivery cart 100 includes a structural frame 1, a controller 18, a plurality of navigational sensors 19, a portable power source 24, a pair of caster wheels 25, and a pair of motorized wheels 26. The structural frame 1 corresponds to the main structure of the cart 100 that can be customized to carry different payloads, accommodate different accessories, and/or freely move through a desired environment. The pair of caster wheels 25 and the pair of motorized wheels 26 enable the movement of the structural frame 1. The controller 18 and the plurality of navigational sensors 19 allow the autonomous operation of the pair of motorized wheels 26 under specific operational configurations of the present disclosure. The portable power source 24 provides the power necessary for the autonomous operation of the controller 18, the plurality of navigational sensors 19, and the pair of motorized wheels 26.

The general configuration of the aforementioned components allows the cart to transport payloads safely and efficiently in different operational environments. As previously discussed, the structural frame 1 is a customizable structure that can be modified to meet specific operational requirements. As can be seen in Figures 1 through 12 and 20, the structural frame 1 includes a plurality of support rails 2 and a plurality of shelves 9. The plurality of support rails 2 includes several rails of equal size and shape that can be arranged to form a vertical structure to support the plurality of shelves 9. For example, the structural frame 1 can be shaped into an overall rectangular structure, with four support rails arranged to serve as the four vertical support columns positioned on each corner of the rectangular structural frame 1. Further, the plurality of shelves 9 corresponds to several shelves that can support the payload to be transported by the cart 100 as well as other components of the present invention. For example, in the rectangular embodiment of the structural frame 1, the plurality of shelves 9 can include several rectangular shelf structures that are removably connected to the corner support rails of the plurality of support rails 2 to form the overall rectangular structure of the structural frame 1.

As can be seen in Figures 1 through 12 and 20, the cart 100 can be arranged as follows: the plurality of shelves 9 is positioned parallel and offset to each other to form a vertical stack of shelves to hold the desired payload in a safe and comfortable manner. The plurality of support rails 2 is positioned parallel to each other to form a vertical support structure that can hold the plurality of shelves 9 in a vertical arrangement with the shelves positioned at a specific distance from each other. Further, the plurality of support rails 2 is perimetrically distributed about each of the plurality of shelves 9 to laterally support the plurality of shelves 9. In addition, each of the plurality of support rails 2 is laterally connected to each of the plurality of shelves 9. In other words, each shelf of the plurality of shelves 9 is laterally supported by each of the plurality of support rails 2 to maintain the plurality of shelves 9 off the ground and separate from each other at the desired distances.

As can be seen in Figures 1 through 12 and 20, the pair of caster wheels 25 and the pair of motorized wheels 26 are further perimetrically distributed about a base shelf 10 of the plurality of shelves 9 to evenly distribute the pair of caster wheels 25 and the pair of motorized wheels 26 across the base shelf 10. The pair of motorized wheels 26 and the pair of caster wheels 25 are preferably positioned on the surface of the base shelf 10 that is oriented towards the ground. In addition, the motorized wheels 26 are mounted onto the base shelf 10 of the plurality of shelves 9 to secure each motorized wheel to the base shelf 10. Similarly, the caster wheels 25 are also mounted onto the base shelf 10 of the plurality of shelves 9, opposite to the pair of motorized wheels 26, to secure each caster wheel to the base shelf 10. Thus, the structural shelf is supported by the pair of caster wheels 25 and the pair of motorized wheels 26.

As can be seen in Figures 1 through 12 and 20, the plurality of navigational sensors 19 is further distributed throughout the structural frame 1 to arrange each of the plurality of navigational sensors 19 at strategic locations throughout the structural frame 1 that help monitor different factors that affect the autonomous operation of the present invention. In addition, the pair of motorized wheels 26 and the plurality of navigational sensors 19 are electronically connected to the controller 18. The controller 18 preferably includes an autonomous navigational software that processes the sensors signals from the plurality of navigational sensors 19 and generates appropriate command signals for the pair of motorized wheels 26. This way, the corresponding signals can be transmitted between the pair of motorized wheels 26, the plurality of navigational sensors 19, and the controller 18. For example, sensor signals generated by the plurality of navigational sensors 19 related to a potential obstacle can be relayed to the controller 18 for processing. After which, the corresponding command signals can be generated by the controller 18 and transmitted to the pair of motorized wheels 26 to adjust the operation of the pair of motorized wheels 26 to avoid the obstacle. Furthermore, the pair of motorized wheels 26, the plurality of navigational sensors 19, and the controller 18 are electrically connected to the portable power source 24 to receive the power necessary for the autonomous operation of each electrical and electronic component. In other embodiments, the cart 100 can be rearranged to accommodate specific payloads or to operate in special environments.

As previously discussed, the structural frame 1 is designed as a modular structure that can be modified to meet specific operational requirements. As can be seen in Figures 1 through 12 and 20, in the rectangular embodiment of the structural frame 1, the plurality of support rails 2 includes a first front rail 3, a second front rail 4, a first rear rail 5, and a second rear rail 6 corresponding to the corner support rails of the rectangular structural frame 1. In addition, the plurality of shelves 9 each includes a shelf panel 13 that corresponds to the flat surface of each shelf of the plurality of shelves 9. To form the rectangular design of the structural frame 1, the first front rail 3, the second front rail 4, the first rear rail 5, and the second rear rail 6 are positioned parallel to each other. In addition, the first front rail 3, the second front rail 4, the first rear rail 5, and the second rear rail 6 are oriented perpendicular to the shelf panel 13 of each of the plurality of shelves 9. This way, a straight rectangular structural frame 1 is formed that keeps the plurality of shelves 9 parallel to the ground to prevent the payload from falling off the plurality of shelves 9.

As can be seen in Figures 1 through 12 and 20, to position the plurality of support rails 2 on the corners of each of the plurality of shelves 9, the first front rail 3 is further positioned opposite to the second front rail 4 across each shelf panel 13 of the plurality of shelves 9. Similarly, the first rear rail 5 is positioned opposite to the second rear rail 6 across each shelf panel 13 of the plurality of shelves 9. This way, the front rails and the rear rails are positioned opposite each other across the shelf panel 13, respectively. Furthermore, the first front rail 3 is positioned opposite to the first rear rail 5 across each shelf panel 13 of the plurality of shelves 9. Similarly, the second front rail 4 is positioned opposite to the second rear rail 6 across each shelf panel 13 of the plurality of shelves 9. Thus, each support rail is positioned on a corner of the rectangular frame, with each shelf of the plurality of shelves 9 being laterally supported by the plurality of support rails 2. In alternate embodiments, different non-rectangular designs may be implemented which may require additional support rails, and/or the plurality of shelves 9 may be rearranged to accommodate different payloads.

As can be seen in Figures 1 through 12, the structural frame 1 is specially designed to facilitate the reconfiguration of the plurality of support rails 2 or the plurality of shelves 9 according to the operational requirements of the present invention. To facilitate the reconfiguration of the structural frame 1, the cart 100 may further include a plurality of rail connectors 31 that allow for the detachable connection between the different components of the structural frame 1. In addition, the plurality of shelves 9 may each further comprising a first lengthwise rail 14, a second lengthwise rail 15, a first widthwise rail 16, and a second widthwise rail 17. The first lengthwise rail 14, the second widthwise rail 17, the second widthwise rail 17, and the second widthwise rail 17 form a rectangular frame around the shelf panel 13 that facilitate the connection of the shelf panel 13 to the plurality of support rails 2 using the plurality of rail connectors 31. The plurality of rail connectors 31 includes several connectors designed to interlock the plurality of shelves 9 at different locations along the plurality of support rails 2 without the use of fasteners.

As can be seen in Figures 1 through 12, the structural frame 1 can be assembled using the plurality of rail connectors 31 in following manner: the first widthwise rail 16 is terminally connected in between the first front rail 3 and the second front rail 4 by a pair of rail connectors of the plurality of rail connectors 31. This way, the first widthwise rail 16 laterally secures each shelf panel 13 to the two front rails of the structural frame 1. Similarly, the second widthwise rail 17 is terminally connected in between the first rear rail 5 and the second rear rail 6 by a pair of rail connectors of the plurality of rail connectors 31 so that the second widthwise rail 17 laterally secures each shelf panel 13 to the two rear rails of the structural frame 1. Further, the first lengthwise rail 14 is terminally connected in between the first front rail 3 and the first rear rail 5 by a pair of rail connectors of the plurality of rail connectors 31. This way, each shelf panel 13 is laterally secured to first front rail 3 and the first rear rail 5 by the first lengthwise rail 14. Similarly, the second lengthwise rail 15 is terminally connected in between the second front rail 4 and the second rear rail 6 by a pair of rail connectors of the plurality of rail connectors 31, which laterally secures each shelf panel 13 to the second front rail 4 and the second rear rail 6. Thus, each shelf panel 13 is securely connected to the plurality of support rails 2. In alternate embodiments, the lateral rails that frame each shelf panel 13 can be altered to accommodate different designs of the structural frame 1. In other embodiments, different accessories can be removably attached to any rail of the structural frame 1 including, but not limited to, transparent or opaque doors with automatic door locks for protection of the payload.

As can be seen in Figures 1 through 12, the structural frame 1 is designed to be customized by facilitating the detachment and attachment of the different components using connectors that do not require fasteners or other tools for fastening. In the preferred embodiment, the first front rail 3, the second front rail 4, the first rear rail 5, the second rear rail 6, the first lengthwise rail 14, the second lengthwise rail 15, the first widthwise rail 16, and the second widthwise rail 17 are slotted metal extrusions such as Aluminum slotted extrusions. In addition, the plurality of rail connectors 31 is a plurality of slot connectors matching the cross-sectional shape and size of the slotted metal extrusions. Different sizes of slotted metal extrusions can be utilized for each rail. For example, the first front rail 3, the second front rail 4, the first rear rail 5, and the second rear rail 6 can be 4040 Aluminum extrusions. The first lengthwise rail 14, the second lengthwise rail 15, the first widthwise rail 16, and the second widthwise rail 17 of the base shelf 10 and an upper shelf 12 of the plurality of shelves 9 can be 2040 Aluminum extrusions. On the other hand, the first lengthwise rail 14, the second lengthwise rail 15, the first widthwise rail 16, and the second widthwise rail 17 of at least one intermediate shelf 11 of the plurality of shelves 9 can be 2060 Aluminum extrusions. Further, the plurality of rail connectors 31 can be several slot sliding nuts that can be fixed to the corresponding ends of the first lengthwise rail 14, the second lengthwise rail 15, the first widthwise rail 16, and the second widthwise rail 17 of each shelf. The design of the plurality of rail connectors 31 matches the shape of the slots of the slotted metal extrusions. For example, for T-slot metal extrusions, T-slot sliding nuts can be utilized. Alternatively, for V-slot metal extrusions, V-slot sliding nuts can be utilized. In other embodiments, different interlocking rails and the corresponding connectors can be implemented for the different components of the structural frame 1.

The pair of motorized wheels 26 and the pair of caster wheels 25 are arranged so that the cart 100 is driven from the front. As can be seen in Figures 1 through 12, the motorized wheels 26 are positioned adjacent to the first widthwise rail 16 of the base shelf 10 of the plurality of shelves 9. This way, the front of the structural frame 1 is preferably the side of the structural frame 1 where the first front rail 3 and the second front rail 4 are positioned. Further, the caster wheels 25 are positioned adjacent to the second widthwise rail 17 of the base shelf 10 of the plurality of shelves 9 so that the rear of the structural frame 1 corresponds to the side of the structural frame 1 where the first rear rail 5 and the second rear rail 6 are positioned. Thus, the cart 100 can move by engaging the pair of motorized wheels 26, and the pair of caster wheels 25 follow the direction of the pair of motorized wheels 26. If the cart 100 takes a turn, a motorized wheel of the pair of motorized wheels 26 accelerates and/or the other motorized wheel decelerates, depending on the speed at which the cart 100 can safely make the turn. In alternate embodiments, different arrangements of motorized wheels and caster wheels can be implemented, or all wheels can be implemented as motorized wheels.

As can be seen in Figures 1 through 12, the pair of motorized wheels 26 and the pair of caster wheels 25 are preferably arranged to evenly support the load from the structural frame 1 and the payload being carried by the present invention. To do so, the plurality of support rails 2 may each include a first rail end 7 and a second rail end 8 corresponding to the terminal ends of each support rail. The first rail end 7 is positioned opposite to the second rail end 8 along the corresponding support rail of the plurality of support rails 2 due to the elongated design of each support rail. Further, the base shelf 10 of the plurality of shelves 9 is positioned adjacent to each second rail end 8 of the plurality of support rails 2. In other words, each second rail end 8 of the plurality of support rails 2 is positioned adjacent to the ground. Furthermore, the pair of motorized wheels 26 and the pair of caster wheels 25 are positioned opposite to each first rail end 7 of the plurality of support rails 2 across the base shelf 10 of the plurality of shelves 9. This way, the pair of caster wheels 25 and the pair of motorized wheels 26 are positioned against the ground to support the structural frame 1 and the payload.

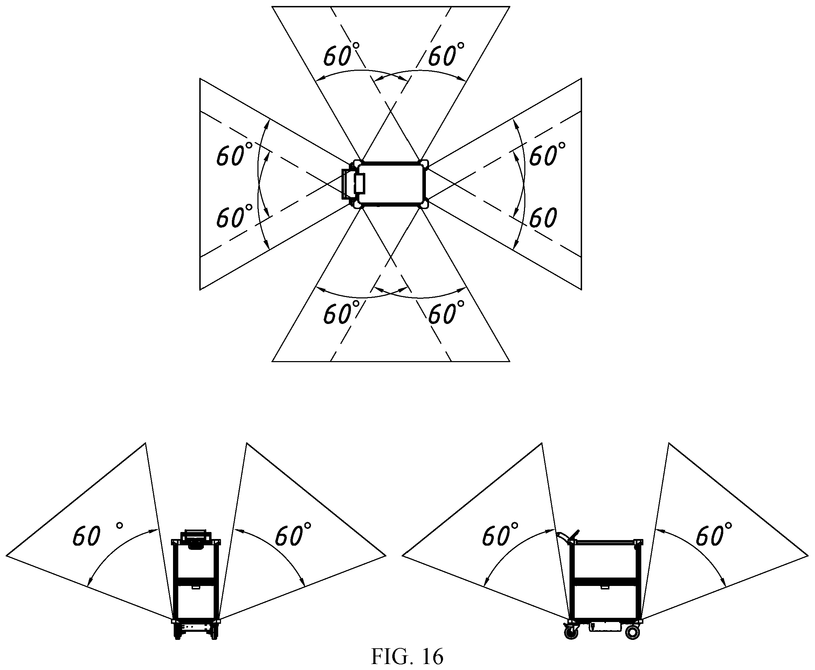

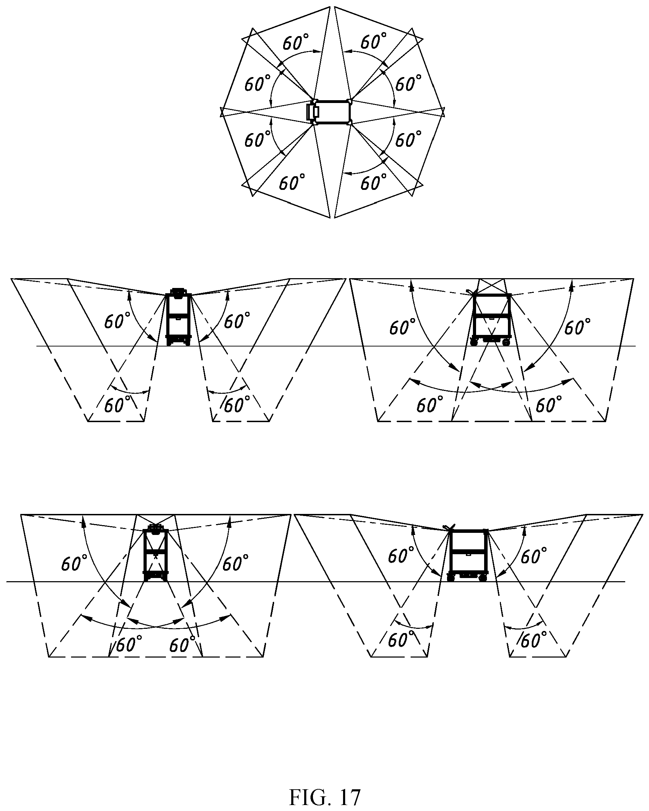

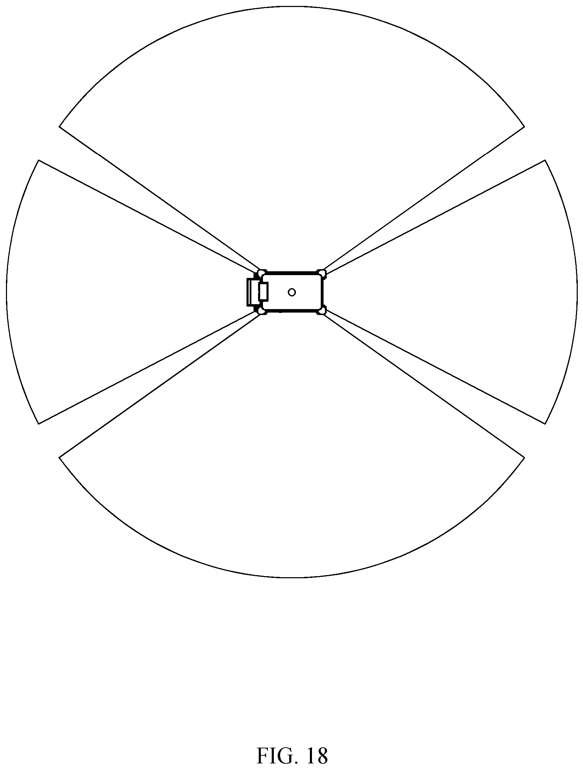

As previously discussed, the plurality of navigational sensors 19 enables the cart 100 to monitor different factors surrounding the structural frame 1 that can affect the autonomous operation of the present invention. As can be seen in Figures 1 through 12 and 16 through 20, the plurality of navigational sensors 19 may include a plurality of upper time-of-flight (TOF) sensors 20 and a plurality of lower TOF sensors 21 that enable the determination of the distances between the structural frame 1 and the surrounding objects in the operational environment. The plurality of upper TOF sensors 20 and the plurality of lower TOF sensors 21 are preferably TOF infrared sensor arrays that enable the automatic precise measurement of distances between the structural frame 1 and surrounding objects to avoid collisions during navigation. Each of the plurality of upper TOF sensors 20 is mounted onto a corresponding first rail end 7 of the plurality of support rails 2 to position the upper TOF sensors on the top area of the structural frame 1. On the other hand, each of the plurality of lower TOF sensors 21 is mounted onto a corresponding second rail end 8 of the plurality of support rails 2 to position the lower TOF sensors on the base of the structural frame 1.

As can be seen in Figures 1 through 12 and 16 through 20, each TOF sensor can be preferably implemented as follows: each TOF sensor is provided within a housing that protects the corresponding TOF infrared sensor arrays, with eight total housings located on each of the eight corners of the structural frame 1. Each housing encloses two TOF infrared sensor arrays, and each array creates an 8x8 grid with 64 independent infrared beams. As a result, 128 beams are implemented in each corner of the structural frame 1. Further, a dedicated custom-made microcontroller can be provided in each housing of the TOF sensors. The microcontroller may be similar to the controller 18. The arrangement of the upper TOF sensors covers the entire perimeter of the structural frame 1 and allow reaching "above" the height of the structural frame 1 to navigate under desks or areas with low clearance. The arrangement of the lower TOF sensors cover "below" the structural frame 1 to detect stairs and low-ground obstacles. In alternate embodiments, different arrangements for the TOF sensors can be implemented to cover different areas surrounding the structural frame 1.

As can be seen in Figures 1 through 12 and 20, to protect the different electronic and electrical components of the cart 100, the cart 100 may further include an electronics housing 32. The electronics housing 32 is designed to support the different electronic and electrical components while allowing access to each component for maintenance and repair. As a result, the controller 18 and the portable power source 24 are mounted within the electronics housing 32 so that the controller 18 and the portable power source 24 are secured within the electronics housing 32. Further, the electronics housing 32 is mounted onto the base shelf 10 of the plurality of shelves 9 to leave space on the other shelves above the base shelf 10 to retain the desired payload. The electronics housing 32 can include different panels that facilitate the operation of the different components mounted within. For example, the lateral panels can be solid metal panels to support and protect the internal components. Intermediate or sectional panels can be solid plastic panels that allow the unobstructed transmission of wireless signals. In different embodiments, different features can be implemented into the electronics housing 32 to facilitate the operation of different components.

As can be seen in Figures 1 through 12 and 20, the electronics housing 32 can accommodate features that allow for the power control of the cart 100. In some embodiments, the cart 100 may further include a power switch 33, a charging port 34, and at least one data port 35. The power switch 33 corresponds to the main switch that turns the system on or off. The charging port 34 allows the recharging of the portable power source 24. The at least one data port 35 enables connecting the controller 18 to an external computing device via wires. As a result, the power switch 33, the charging port 34, and the data port are distributed about the electronics housing 32 to not clutter the electronics housing 32. In addition, the power switch 33, the charging port 34, and the data port are integrated into the electronics housing 32 so that each is accessible to the electronics housing 32 without removing the electronics housing 32. Further, the power switch 33 and the data port are electronically connected to the controller 18 to enable the transmission of electronic signals between the components. Furthermore, the power switch 33 and the charging port 34 are electrically connected to the portable power source 24. Thus, the user can turn on/off the system of the cart 100 via the power switch 33, and the portable power source 24 can be charged via the charging port 34.

As can be seen in Figures 1 through 12 and 20, to further facilitate the autonomous navigation of the robotic delivery cart 100, the cart 100 may further include an Inertial measurement unit (IMU) 36. The IMU 36 facilitates the detection of rotations, accelerations, orientations, and slopes of the structural frame 1. In addition, the plurality of navigational sensors 19 may further include at least one environmental sensor 22 that enable the measurement of air quality, humidity, temperature, pressure of the operational environment of the system of the present invention. So, the IMU 36 and the at least one environmental sensor 22 are mounted within the electronics housing 32 to protect the IMU 36 and the at least one environmental sensor 22 with the electronics housing 32. Further, the IMU 36 and the at least one environmental sensor 22 are electronically connected to the controller 18 to enable the relay of the generated signals to the controller 18 for processing. Furthermore, the IMU 36 and the at least one environmental sensor 22 are electrically connected to the portable power source 24 to provide the power necessary for the operation of the IMU 36 and the at least one environmental sensor 22. In other embodiments, additional electronic components and electrical components can be implemented within the electronics housing 32 to facilitate the autonomous operation of the cart 100. For example, the system of the cart 100 may further include, but is not limited to, a hub motors control box, Solid State Relays (SSRs), at least one terminal block, a voltage regulator, cooling fans, etc.

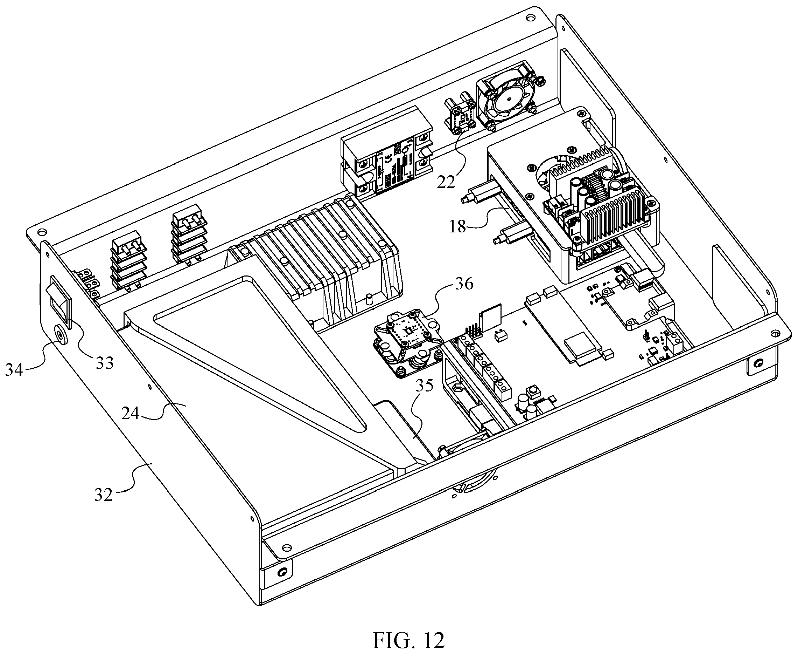

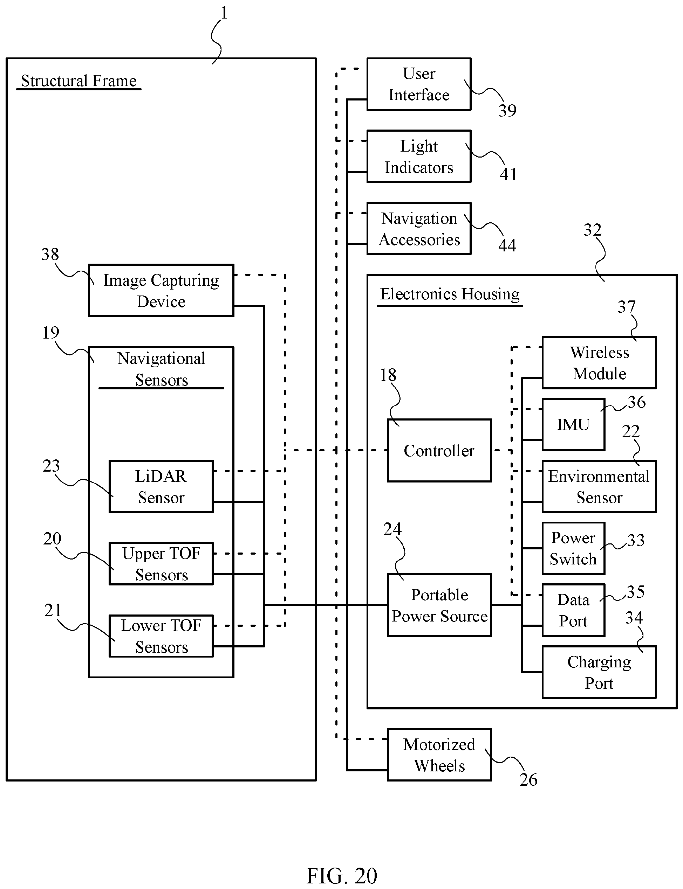

As previously discussed, the cart 100 can enable the wireless transmission of data to enable remote control and configuration of the cart 100. As can be seen in Figures 12 and 20, the cart 100 may further include a wireless module 37 that enables the wireless transmission of data via different wireless technologies and protocols. For example, the wireless module 37 can include Wi-Fi antennas that enable the transmission of data via a Wi-Fi network. So, the wireless module 37 is mounted within the electronics housing 32 so that the wireless module 37 is protected by the electronics housing 32. Further, the wireless module 37 is electronically connected to the controller 18 to enable the transmission of data between the wireless module 37 and the controller 18. Furthermore, the wireless module 37 is electrically connected to the portable power source 24 to provide the power necessary for the operation of the wireless module 37. In other embodiments, different wireless technologies can be implemented into the cart 100.

As can be seen in Figures 1 through 12 and 20, the plurality of navigational sensors 19 may further include a light detection and ranging (LiDAR) sensor 23 that can be used for remote sensing of the operational environment via pulsed laser beams to measure ranges. The LiDAR sensor 23 is mounted onto an intermediate shelf 11 of the plurality of shelves 9 to secure the LiDAR sensor 23 to the structural frame 1. The positioning of the LiDAR frame allows unobstructed 360-degree view for the laser beam around the structural frame 1 and protects the LiDAR sensor 23 from dust and other particles. In other embodiments, different arrangements of the LiDAR sensor 23 can be implemented for different coverage.

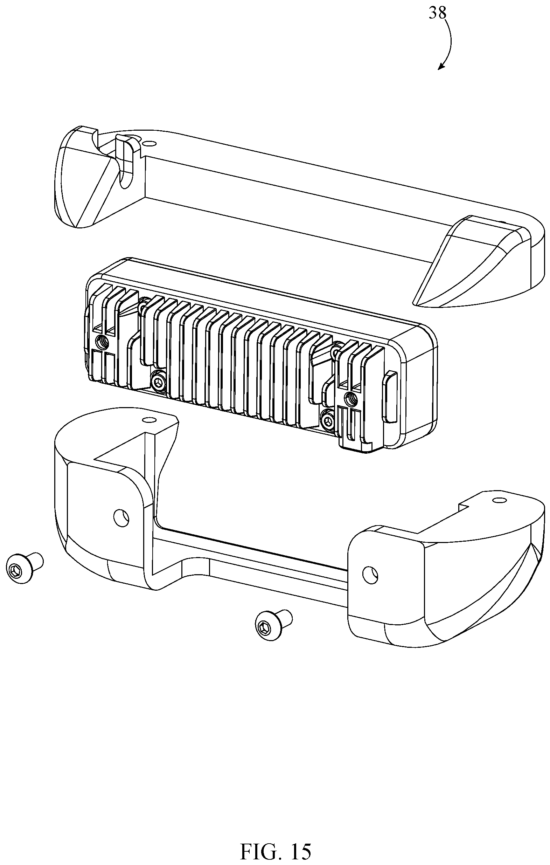

In addition to the plurality of navigational sensors 19, different monitoring devices can be implemented for greater monitoring of the operational environment of the cart 100. As can be seen in Figures 1 through 12, 15, and 20, the cart 100 may further include an image capturing device 38. The image capturing device 38 can be a stereo vision camera that compliments the system's autonomous navigational capabilities by capturing the different elements of the operational environment. The image capturing device 38 is perimetrically positioned about an upper shelf 12 of the plurality of shelves 9 to provide unobstructed view of the image capturing device 38. The image capturing device 38 is also mounted onto the upper shelf 12 of the plurality of shelves 9 to provide a wide field of view. Further, the image capturing device 38 is electronically connected to the controller 18 to relay the image data captured by the image capturing device 38. Furthermore, the image capturing device 38 is electrically connected to the portable power source 24 to provide the power necessary for the operation of the image capturing device 38. In some embodiments, the image capturing device 38 can be protected by a camera case and a camera cover that protect the different components of the image capturing device 38. In alternate embodiments, different media devices can be implemented for the autonomous operation of the cart 100.

It is contemplated by the present disclosure that users may directly monitor and control operation of the autonomous robotic delivery cart 100. As can be seen in Figures 1 through 12, the cart 100 may further include a user interface 39 and an interface holder 40. The user interface 39 is preferably a touchscreen display that allows the user to access the autonomous navigation software of the system of the cart 100 for direct configuration. The interface holder 40 can be custom brackets that hold the user interface 39 at a specific orientation for ease of access by the user. So, the interface holder 40 is perimetrically positioned about an upper shelf 12 of the plurality of shelves 9 to keep the user interface 39 at a comfortable height on the structural frame 1. In addition, the user interface 39 is laterally mounted onto the upper shelf 12 of the plurality of shelves 9 by the interface holder 40 to secure the user interface 39 to the structural frame 1. Further, the user interface 39 is electronically connected to the controller 18 to enable the transmission of data between the controller 18 and the user interface 39. Furthermore, the user interface 39 is electrically connected to the portable power source 24 to provide the power necessary for the operation of the user interface 39.

The user interface 39 facilitates allowing users to directly monitor and control the autonomous robotic delivery cart 100. For example, the user interface 39 can allow the user to enter instructions for the controller 18 to cause the robotic delivery cart 100 to move to a specific destination (waypoint). The user interface 39 can display a graphical list of available waypoints showing the place holders for unused waypoints. The user can manually move the robotic delivery cart 100 to a desired location and press the place holder function to designate the location to a desired waypoint. The user can label the waypoint with any name for ease of navigation. As the robotic delivery cart 100 moves in the operational environment, an inner virtual map is automatically constructed by the autonomous navigation software based on data from the IMU 36, the LiDAR sensor 23, the image capturing device 38, and the TOF sensors. Different navigational data can be displayed during the autonomous navigation of the robotic delivery cart 100. For example, movement speed is shown on the left of the user interface 39 and a digital compass on the right. In the center of the user interface 39, an emergency stop function can be provided.

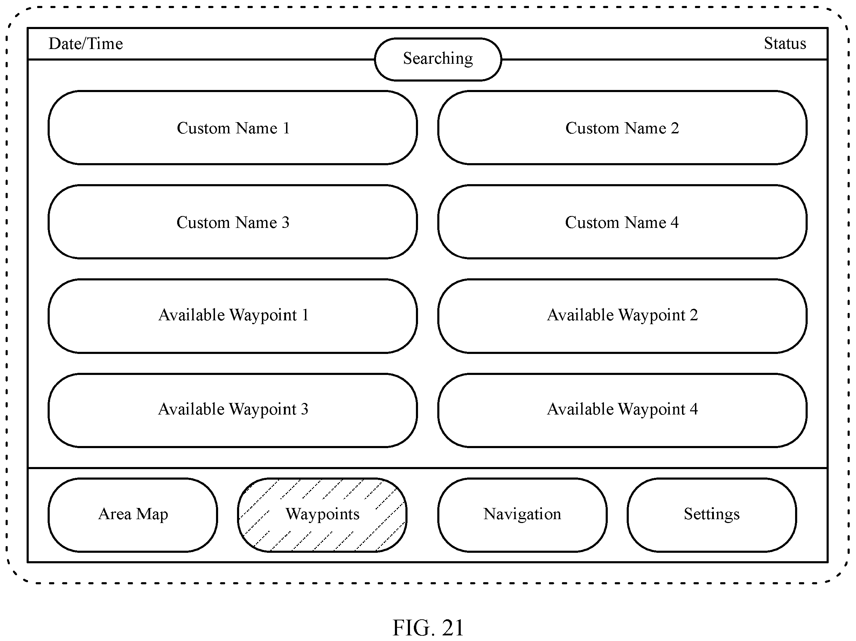

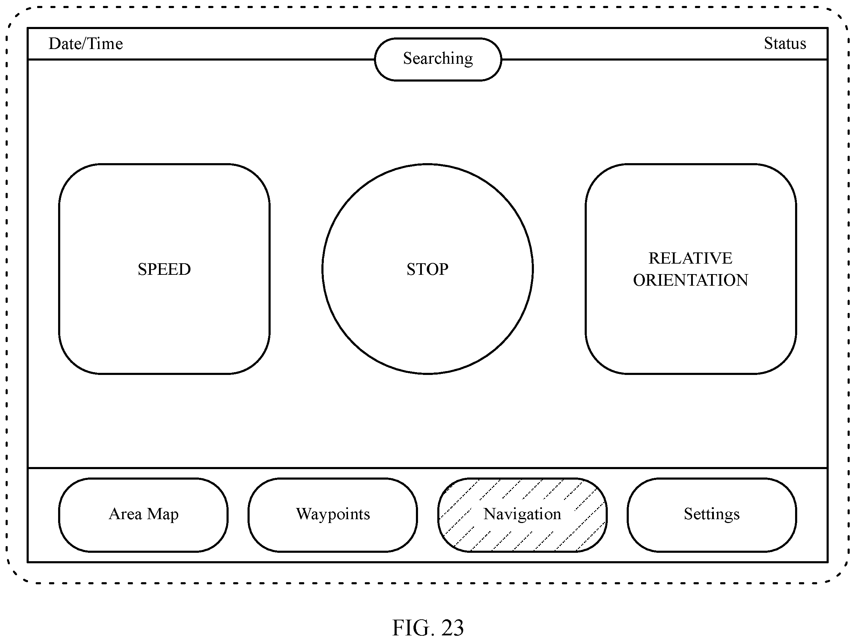

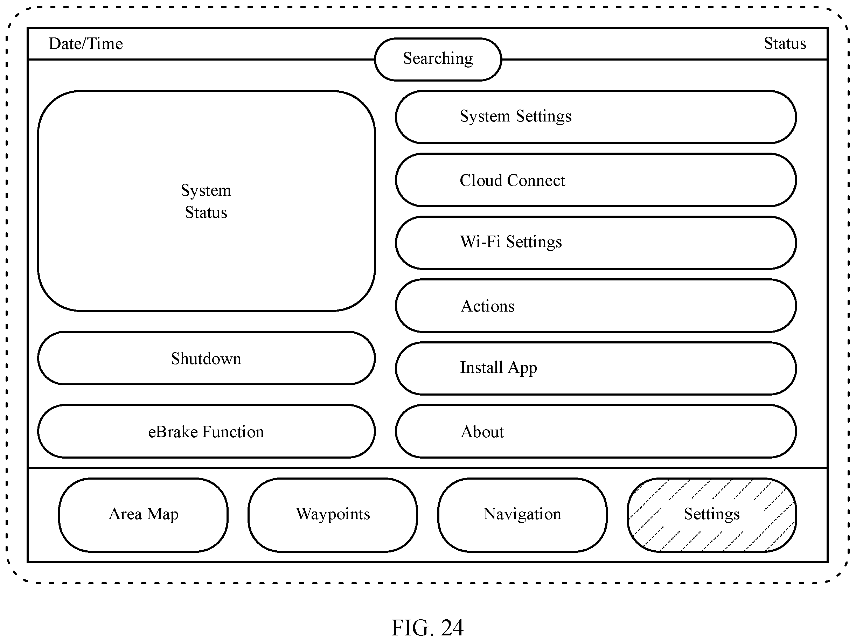

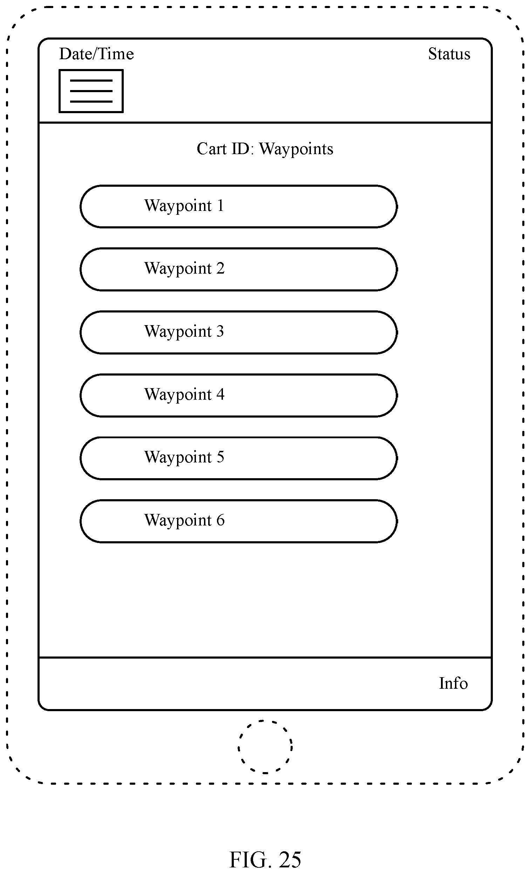

Additional features can be provided on the user interface 39. For example, a display mode can be implemented when power saving mode is enabled. The robotic delivery cart 100 automatically enters the power saving mode after a predetermined period of inactivity, for example, one minute. When the user interface 39 is engaged or the robotic delivery cart 100 is moved by the user, the autonomous navigation software automatically reenters the operational mode. Furthermore, the same operational features displayed on the user interface 39 can be accessed from an external computing device. As can be seen in Figures 21 through 25, the robotic delivery cart 100 can further include a software application that can be developed for different computing devices. For example, a mobile application (app) can be developed for smartphones or tablet computers. Similarly, a desktop application can be developed for laptops, desktop computers, etc. In alternate embodiments, different control features can be implemented for different software applications.

In some embodiments, different visual indicators can be implemented into the robotic delivery cart 100 to visually show a current operational mode. As can be seen in Figures 1 through 12 and 20, the robotic delivery cart 100 may further include a plurality of light indicators 41 that visually indicate the current mode of operation of the robotic delivery cart 100. For example, the plurality of light indicators 41 can be Light Emitting Diode (LED) lights that output a green light when the cart 100 has reached the designated waypoint, a yellow light when autonomous navigation is in progress, and a red light if there is a navigational error. Combinations of colors can also be implemented to indicate other modes of operation. For example, simultaneous output of red and yellow lights can occur when there was an unexpected obstacle during navigation and the robotic delivery cart 100 is automatically re-routing to avoid that obstacle. The plurality of light indicators 41 is perimetrically distributed about an upper shelf 12 of the plurality of shelves 9 so that the plurality of light indicators 41 is clearly visible on the surroundings. The plurality of light indicators 41 is laterally mounted onto the upper shelf 12 of the plurality of shelves 9 to secure the plurality of light indicators 41 to the structural frame 1. Further, the plurality of light indicators 41 is electronically connected to the controller 18 to enable the control of the operation of the plurality of light indicators 41 by the controller 18. Furthermore, the plurality of light indicators 41 is electrically connected to the portable power source 24 to provide the power necessary for the operation of the plurality of light indicators 41. In other embodiments, different visual indicators can be implemented.

As previously discussed, the robotic delivery cart 100 may be manually moved by the user if necessary. As can be seen in Figures 1 through 12, to facilitate the manual control of the movement of the robotic delivery cart 100, the cart 100 may further include at least one handlebar 42. The at least one handlebar 42 provides a secure structure from which the user can push or pull the structural frame 1. The at least one handlebar 42 is perimetrically positioned about an upper shelf 12 of the plurality of shelves 9. This way, the at least one handlebar 42 is a comfortable height from which the user can maneuver the structural frame 1. In addition, the at least one handlebar 42 is laterally mounted onto the upper shelf 12 of the plurality of shelves 9 to secure the at least one handlebar 42 to the structural frame 1. In other embodiments, different mechanisms can be implemented that allow the user to manually move the robotic delivery cart 100.

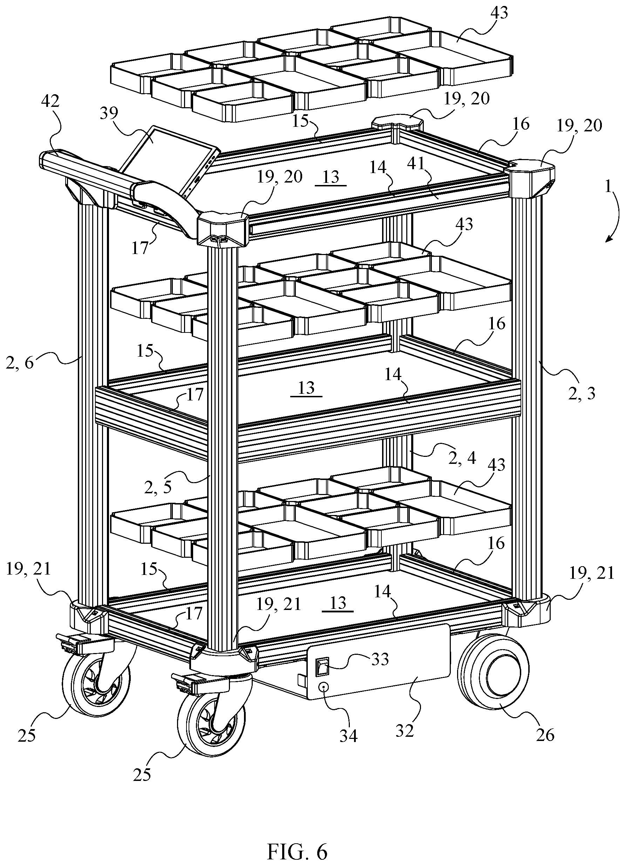

In some embodiments, the robotic delivery cart 100 can include means to retain different payload items on the plurality of shelves 9. As can be seen in Figure 6, the cart 100 may further include a plurality of utility trays 43 that can hold specific items that need to be transported throughout the operational environment. Each utility tray of the plurality of utility trays 43 can be situated upon a corresponding shelf of the plurality of shelves 9 so that the payload items can be held on the different shelves on the structural frame 1. In other embodiments, different accessories can be provided to help secure the payload items to different locations on the structural frame 1.

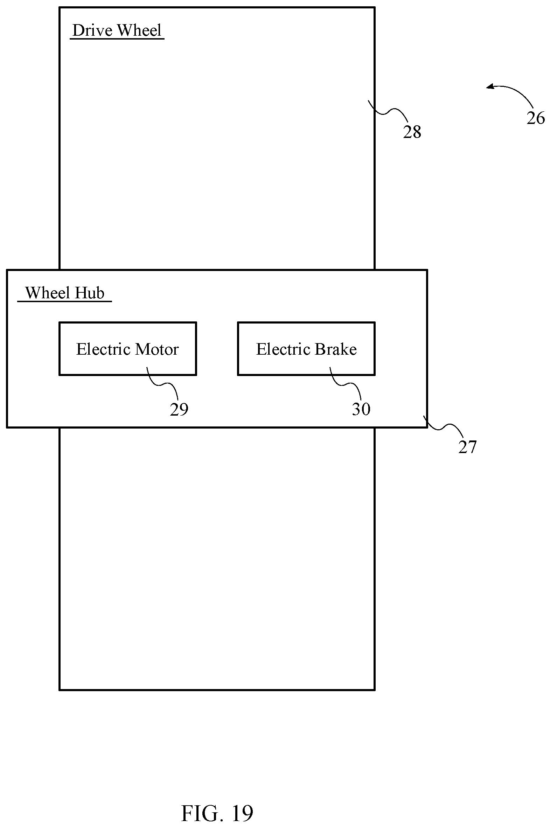

As previously discussed, the pair of motorized wheels 26 provide the propulsion necessary for the autonomous navigation of the cart 100. As can be seen in Figures 19 and 20, the pair of motorized wheels 26 may each include a wheel hub 27, a drive wheel 28, an electric motor 29, and an electric brake 30. The wheel hub 27 corresponds to the structure that allows the rotation of the corresponding drive wheel 28 while securing the corresponding motorized wheel to the structural frame 1. The electric motor 29 generates the torque necessary to rotate the corresponding drive wheel 28 at the desired rotational speed. The electric brake 30 generates the frictional force necessary to decelerate the rotating drive wheel 28. The wheel hub 27 is mounted onto the base shelf 10 of the plurality of shelves 9 to secure the corresponding motorized wheel to the structural frame 1. The drive wheel 28 is also rotatably connected to the wheel hub 27 to secure the drive wheel 28 to the wheel hub 27 while enabling the drive wheel 28 to rotate on the wheel hub 27. Further, the electric motor 29 and the electric brake 30 are mounted within the wheel hub 27 to connect the electric motor 29 and the electric brake 30 to the drive wheel 28. In addition, the electric motor 29 and the electric brake 30 are operatively connected to the drive wheel 28. The electric motor 29 is used to accelerate the rotation of the drive wheel 28 by converting electrical energy into mechanical energy. For example, the electric motor 29 can include an electromagnetic stator and a magnetic rotor that allow rotation of the drive wheel 28 in the desired angular direction. On the other hand, the electric brake 30 is used to decelerate the rotation of the drive wheel 28 in a safe and controlled manner. In other embodiments, the pair of motorized wheels 26 can be altered to operate in specific environments.

In some embodiments, the cart 100 may further include a plurality of navigation accessories 44 that can be selectively attached to the structural frame 1 to enhance the autonomous navigation of the robotic delivery cart 100. For example, the plurality of navigation accessories 44 can include, but is not limited to, a Radio Frequency Identification (RFID) reader and antennas for scanning inventory, ultraviolet (UV) lamps for area disinfection, camera arrays for area security, etc. Further, a selected navigation accessory of the plurality of navigation accessories 44 can be mounted onto a corresponding shelf of the plurality of shelves 9 using one or more rail connectors. Alternatively, another selected navigation accessory of the plurality of navigation accessories 44 can be mounted onto a corresponding support rail of the plurality of support rails 2 using one or more rail connectors. In other words, any navigation accessory can be mounted around the structural frame 1 to facilitate the operation of the desired navigation accessory. In other embodiments, different navigation accessories can be removably attached to the structural frame 1 to enhance the autonomous navigation of the system of the present invention.

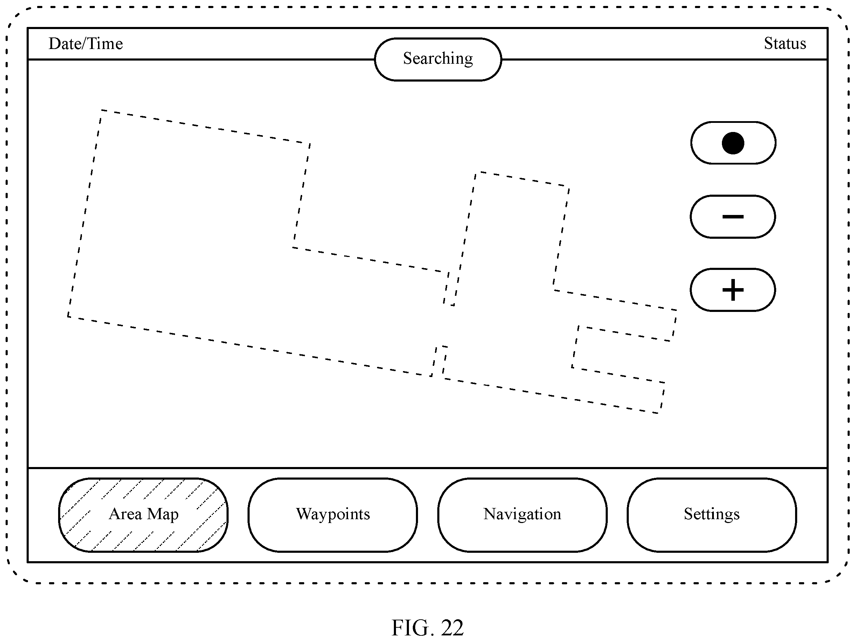

The robotic delivery cart 100 may autonomously navigate. As can be seen in Figure 22, a virtual map of the operational environment of the cart 100 is stored on the controller 18. The virtual map corresponds to a digital rendition of the physical operational environment of the cart 100. The virtual map can be manually uploaded into the controller 18 from an external computing system or automatically generated by the autonomous navigation software of the controller 18. In addition, the virtual map can be automatically updated as the robotic delivery cart 100 autonomously navigates through the operational environment. The virtual map includes a database of waypoints, wherein each waypoint corresponds to a specific physical location in the physical operational environment.

A method for autonomously operating the robotic delivery cart 100 may include the steps of prompting the user to input a navigation command using the user interface 39. The navigation command can include information regarding at least one waypoint which the motorized cart must autonomously navigate to. Once the navigation command has been input, the navigation command is relayed from the user interface 39 to the controller 18 from processing. The controller 18 processes the navigational command and generates the appropriate command signals for the pair of motorized wheels 26 to propel the motorized cart towards the corresponding waypoint. As the robotic delivery cart 100 is propelled towards the waypoint by the pair of motorized wheels 26, the plurality of navigational sensors 19 and other navigational devices generate the corresponding sensors signals that help the cart 100 to safely and efficiently navigate through the operational environment towards the target waypoint. The sensor signals are relayed from the corresponding navigational sensor to the controller 18 for processing, and the appropriate feedback command signals are relayed to the pair of motorized wheels 26. For example, if an obstacle is detected in proximity to the cart 100, the controller 18 can direct the pair of motorized wheels 26 to brake and/or turn the cart 100 to avoid the obstacle. Once the cart 100 arrives at the target waypoint, the user can input a new navigation command towards a new waypoint.

Some navigational sensors of the plurality of navigational sensors 19 are arranged to monitor the surroundings of the cart 100 to prevent collisions while the cart 100 autonomously travels through the operational environment. The subprocess of monitoring the proximity of the cart 100 with the navigational sensors includes the steps of monitoring the cart's 100 surroundings with the plurality of upper TOF sensors 20, the plurality of lower TOF sensors 21, the LiDAR sensor 23, and the image capturing device 38. The plurality of upper TOF sensors 20 preferably monitors elevated obstacles that limits upper clearance of the cart 100. For example, the plurality of upper TOF sensors 20 prevents the cart 100 from hitting a desk or elevated cabinets. The plurality of lower TOF sensors 21 preferably monitors ground obstacles that limits lower clearance of the cart 100. For example, the plurality of lower TOF sensors 21 prevents the cart 100 from hitting ground steps or small objects on the ground. Further, the LiDAR preferably monitors objects present around the cart 100 that are at the same level as the cart 100, such as chairs, other people, etc. Furthermore, the image capturing device 38 captures image data of objects present on the front of the cart 100 that helps the autonomous navigation software determine what the objects are.

Once one or more proximal objects are determined to be present within close proximity of the cart 100, the controller 18 determines potential obstacles from the proximal objects that may affect the current navigational path of the cart 100. If one or more proximal objects are determined to be potential obstacles for the current navigational path, the controller 18 generates command signals for the pair of motorized wheels 26 to avoid the potential obstacles. For example, the command signals can include signals for the pair of motorized wheels 26 to decelerate to a stop before colliding with the potential obstacles, turning to avoid the potential obstacles, stopping and backing up to follow a new path, etc. Finally, the generated command signals are transmitted to the pair of motorized wheels 26 which are then promptly executed by the pair of motorized wheels 26. This overall process is iterated for a plurality of iterations at predetermined intervals throughout the autonomous navigation of the cart 100.

In addition to the autonomous navigation of the cart 100, the method of the cart 100 allows for autonomous mapping of the virtual map while the cart 100 autonomously navigates to the target waypoint within the operational environment. To do so, the controller 18 may further include an autonomous mapping software that automatically maps and updates the virtual map as the cart 100 moves through the operational environment. The subprocess of mapping the virtual map while autonomously navigating through operational environment includes the steps of monitoring the cart 100's surroundings with the plurality of upper TOF sensors 20, the plurality of lower TOF sensors 21, the LiDAR sensor 23, and the image capturing device 38. As the cart 100 moves through the operational environment, the autonomous mapping software tracks objects close to the cart 100 within the operational environment. Once one or more proximal objects are detected near the cart 100, the proximal object data is relayed to the controller 18 to be processed by the autonomous mapping software. For example, proximal object data can include the current position of the cart 100, position and distance of the proximal object in relation to the cart 100, etc. Further, if the detected proximal object exists in the virtual map, the object data is validated by the autonomous mapping software to ensure that stored object data coincides with the collected data. If the detected proximal objects does not exist in the virtual map, the object data is stored and appended into the virtual map so that the virtual map is always up to date.

In addition to maintaining the virtual map updated, the autonomous mapping of the virtual map can help the system of the cart 100 to determine the current position of the cart 100 in the operational environment. The subprocess of determining the current position of the cart 100 based on proximal objects includes the steps of monitoring the cart 100's surroundings with the plurality of upper TOF sensors 20, the plurality of lower TOF sensors 21, the LiDAR sensor 23, and the image capturing device 38. With the collected data of the proximal objects around the cart 100, the autonomous navigational software processes the proximal object data to determine the proximal objects around the cart 100 and the arrangement of the proximal objects relative to the cart 100. This is then compared with object data currently stored in the virtual by the autonomous navigational software to determine the accurate current position of the cart 100 in the operational environment. In other embodiments, different mapping and navigational methodologies can be implemented to facilitate the autonomous navigation of the cart 100.

As previously discussed, the system of the cart 100 enables the manual mapping of the plurality of waypoints of the virtual map corresponding to different physical locations in the operational environment. The subprocess of manually mapping the waypoints of the virtual map includes the steps of moving the cart 100 to the target location in the operational environment. The user can move the cart 100 using the at least one handlebar 42. Once the cart 100 is positioned at the desired location, the user is prompted to designate the current physical location in the operational environment as a waypoint of the virtual map using the user interface 39. The user interface 39 can display a graphical list of available waypoints showing the place holders for unused waypoints. In addition, the user interface 39 can display a graphical dialog to help the user manually designate a physical location as a waypoint. Once the user confirms a physical location in the operational environment as a new waypoint, the physical location data corresponding to the new waypoint is relayed to the controller 18 for processing. Then, the autonomous mapping software appends the new waypoint into the virtual map for future navigation of the cart 100. Furthermore, the user interface 39 can allow the user to custom label the different waypoints for easier use of the system of the present invention. In other embodiments, different means of creating new waypoints can be implemented.

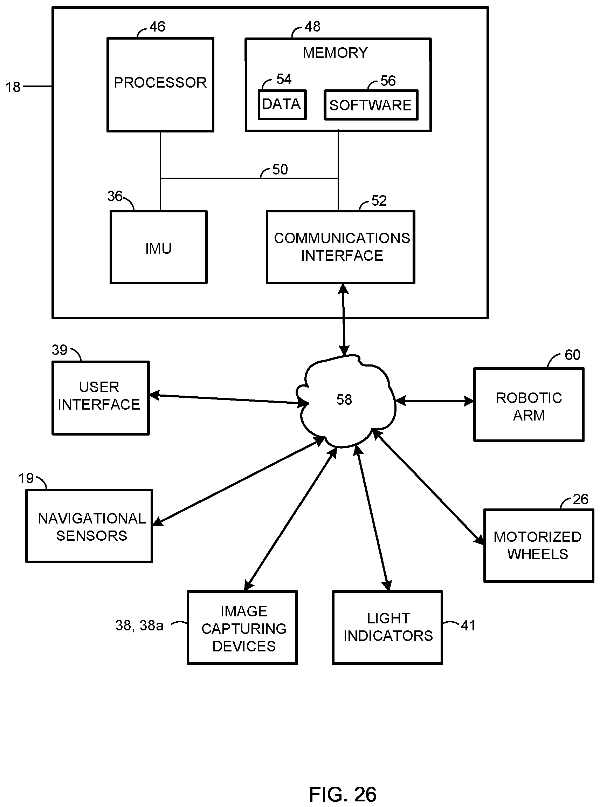

Figure 26 is a block diagram illustrating the example controller 18 for use in operating the robotic delivery cart 100 to autonomously transport objects according to an embodiment of the present disclosure. The controller 18 includes components such as, but not limited to, one or more processors 46, a memory 48, a bus 50, the IMU 36, and a communications interface 52. General communication between the components in the controller 18 is provided via the bus 50.

The processor 46 executes software instructions, or computer programs, stored in the memory 48. As used herein, the term processor is not limited to just those integrated circuits referred to in the art as a processor, but broadly refers to a computer, a microcontroller, a microcomputer, a programmable logic controller, an application specific integrated circuit, and any other programmable circuit capable of executing at least a portion of the functions and/or methods described herein. The above examples are not intended to limit in any way the definition and/or meaning of the term "processor."

The memory 48 may be any non-transitory computer-readable recording medium. Non-transitory computer-readable recording media may be any tangible computerbased device implemented in any method or technology for short-term and long-term storage of information or data. Moreover, the non-transitory computer-readable recording media may be implemented using any appropriate combination of alterable, volatile or non-volatile memory or non-alterable, or fixed, memory. The alterable memory, whether volatile or non-volatile, can be implemented using any one or more of static or dynamic RAM (Random Access Memory), a floppy disc and disc drive, a writeable or re-writeable optical disc and disc drive, a hard drive, flash memory or the like. Similarly, the non-alterable or fixed memory can be implemented using any one or more of ROM (Read-Only Memory), PROM (Programmable Read-Only Memory), EPROM (Erasable Programmable Read-Only Memory), EEPROM (Electrically Erasable Programmable Read-Only Memory), and disc drive or the like. Furthermore, the non-transitory computer-readable recording media may be implemented as smart cards, SIMs, any type of physical and/or virtual storage, or any other digital source such as a network or the Internet from which computer programs, applications or executable instructions can be read.

The memory 48 may be used to store any type of data 54 including, but not limited to, data captured by the navigational sensors 19, virtual maps, waypoints, object data, and environmental data, images of objects that may be transported by the cart 100, location data of objects to be transported, and location data of features in building infrastructure. The stored images may be referred to herein as record images.

Additionally, the memory 48 can be used to store any type of software 56. As used herein, the term "software" is intended to encompass an executable computer program that exists permanently or temporarily on any non-transitory computer-readable recordable medium that causes the controller 18 to perform at least a portion of the functions, methods, and/or algorithms described herein. Software includes, but is not limited to, operating systems, Internet browser applications, the navigational software, the area mapping software, the waypoint software application, trained machine learning models, authentication application, and any other software and/or any type of instructions associated with algorithms, processes, or operations for controlling the general functions and operations of the robotic delivery cart 100. The software may also include computer programs that implement buffers and use RAM to store temporary data.

The autonomous navigational software enables, for example, processing the sensor signals from the plurality of navigational sensors 19 and generating appropriate command signals for the pair of motorized wheels 26. The autonomous mapping software enables, for example, automatically mapping and updating the virtual map as the cart 100 moves through the operational environment. The elevator mode software application enables, for example, locating all buttons to call an elevator and to locate and operate buttons inside the elevator. The authentication software may, for example, compare a captured image against a record image to determine whether the two match.

A machine learning algorithm (MLA) may be used to train a machine learning model (MLM) for enhancing detection of elevator buttons. MLMs have parameters which are modified during training to optimize functionality of the models trained using a machine learning algorithm (MLA). MLAs include at least classifiers and regressors. Example classifiers are Deep Neural Networks (DNNs), Time Delay Neural Networks (TDNNs), Recurrent Neural Networks (RNNs), Convolutional Neural Networks (CNNs), Residual Networks (Res-Nets), Generative Adversarial Networks (GANs), transformers, and ensemble learning models. Elevator button locator software may also be stored in the memory 48. The elevator button locator software may be a trained MLM.

The user interface 39 includes a display and together they allow interaction between a user and the controller 18. The display part of the user interface 39 may include a visual display or monitor that displays information. For example, the display may be a Liquid Crystal Display (LCD), an active matrix display, plasma display, or cathode ray tube (CRT). The user interface 39 may include a keypad, a keyboard, a mouse, an illuminator, a signal emitter, a microphone, and/or speakers.

Moreover, the user interface 39 and the display may be integrated into a touch screen display. Accordingly, the display may also be used to show a graphical user interface, which can display various data and provide "forms" that include fields that allow for the entry of information by the user. Touching the screen at locations corresponding to the display of a graphical user interface allows the person to interact with the controller 18 to enter data, change settings, control functions, etc. Consequently, when the touch screen is touched, the user interface 39 communicates this change to the processor 46, and settings can be changed or user entered information can be captured and stored in the memory 48. For example, the user interface 39 can be operated by a person to directly control the robotic delivery cart 100.

The communications interface 52 provides the controller 18 with two-way data communications. Moreover, the communications interface 52 enables the controller 18 to wirelessly access the Internet and otherwise communicate over the network 58. By way of example, the communications interface 52 may be a digital subscriber line (DSL) card or the wireless modem 37, an integrated services digital network (ISDN) card, a cable modem, or a telephone modem to provide a data communication connection to a corresponding type of telephone line. As another example, the communications interface 52 may be a local area network (LAN) card (e.g., for Ethemet.TM. or an Asynchronous Transfer Model (ATM) network) to provide a data communication connection to a compatible LAN.

As yet another example, the communications interface 52 may be a wire or a cable connecting the controller 18 with a LAN, or with accessories such as, but not limited to, the image capturing devices 38. Further, the communications interface 52 may include peripheral interface devices, such as a Universal Serial Bus (USB) interface, a PCMCIA (Personal Computer Memory Card International Association) interface, and the like. Thus, it should be understood the communications interface 52 may enable the controller 18 to conduct any type of wireless or wired communications such as, but not limited to, transmitting messages to an electronic device (not shown) associated with an operator of the robotic cart 100 when an error occurs. Although the controller 18 includes a single communications interface 52, the controller 18 may alternatively include multiple communications interfaces 52.

The communications interface 52 also allows the exchange of information across the network 58. The exchange of information may involve the transmission of radio frequency (RF) signals through an antenna (not shown). Moreover, the exchange of information may be between the controller 18 and any other computer systems (not shown) and any other electronic devices (not shown) capable of communicating over the network 58. The computer systems (not shown) and the electronic devices (not shown) typically include components similar to the components included in the controller 18'.

The network 58 may each be a 5G communications network. Alternatively, the network 58 may be any wireless network including, but not limited to, 4G, 3G, Wi-Fi, Global System for Mobile (GSM), Enhanced Data for GSM Evolution (EDGE), and any combination of a LAN, a wide area network (WAN) and the Internet. The network 58 may also be any type of wired network or a combination of wired and wireless networks.

The communications interface 52 may include Radio Frequency Identification (RFID) components or systems for receiving information from other electronic devices (not shown) and for transmitting information to other electronic devices (not shown). The communications interface may alternatively, or additionally, include components with Bluetooth, Zigbee, Near Field Communication (NFC), infrared, or other similar capabilities. Communications between the controller 18 and other electronic devices (not shown) may occur via NFC, RFID, Zigbee, Bluetooth or the like.

A network 58 may be implemented as a 5G communications network. Alternatively, the network 58 may be implemented as any wireless network including, but not limited to, 4G, 3G, Wi-Fi, Global System for Mobile (GSM), Enhanced Data for GSM Evolution (EDGE), and any combination of a LAN, a wide area network (WAN) and the Internet. The network 58 may also be any type of wired network or a combination of wired and wireless networks. The network 58 may also include routers (not shown) and firewalls (not shown).

The controller 18 may communicate with the user interface 39, light indicators 41, motorized wheels 26, the navigational sensors 19, the image capture device 38, an image captured device 38a, the robotic arm 60, any sensors and/or cameras included in a robotic arm, and any other electronic device (not shown) via the network 58 to operate the robotic delivery cart 100 to autonomously transport objects according to an embodiment of the present disclosure described herein. The navigational sensors 19 include, but are not limited to, ToF sensors, LIDARs, and environmental sensors 22.

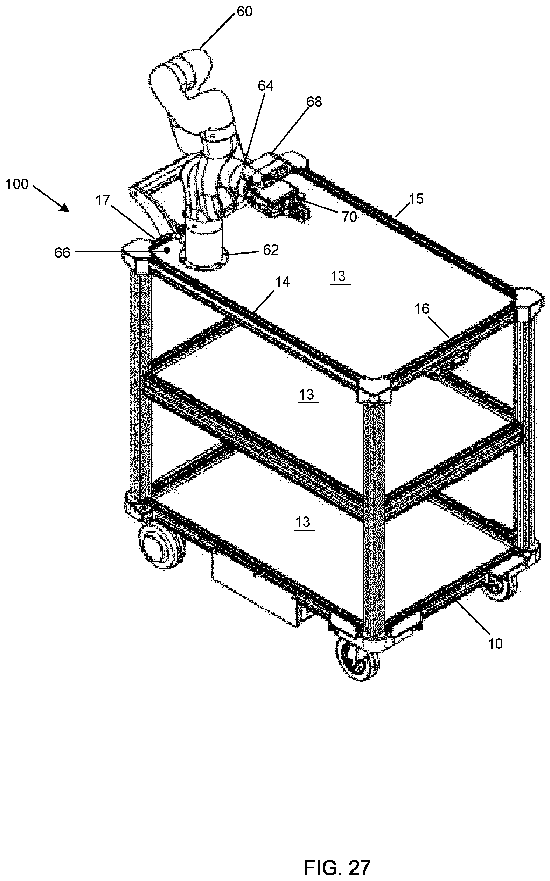

Figure 27 is a perspective view of the robotic delivery cart 100, further including an example robotic arm 60. The robotic arm 60 includes a first end 62 and a second end 64 and can move in six independent degrees of freedom. The robotic arm 60 receives instructions from the controller 18 and responds in accordance with the instructions. For example, the controller 18 may transmit via the network 58 an instruction for moving the second end 64 to grasp an object.

The first lengthwise rail 14 and the second widthwise rail 17 define a corner 66 of the shelf panel 13. The first end 62 of the robotic arm 60 is positioned proximate the corner 66. Positioning the first end 62 proximate the corner 66 facilitates optimizing the reach of the arm 60 while attempting to access objects and facilitates optimizing access to objects on shelves. The first end 62 may be fixedly attached or removably attached to the shelf panel 13. The first end 62 may be fixedly attached using, for example, an adhesive. Alternatively, the first end 62 may be removably attached using, for example, mechanical fasteners. The second end 64 of the robotic arm 60 includes, for example, a camera 68 and a gripper 70. The camera 68 can be similar to the image capturing device 38 described herein.

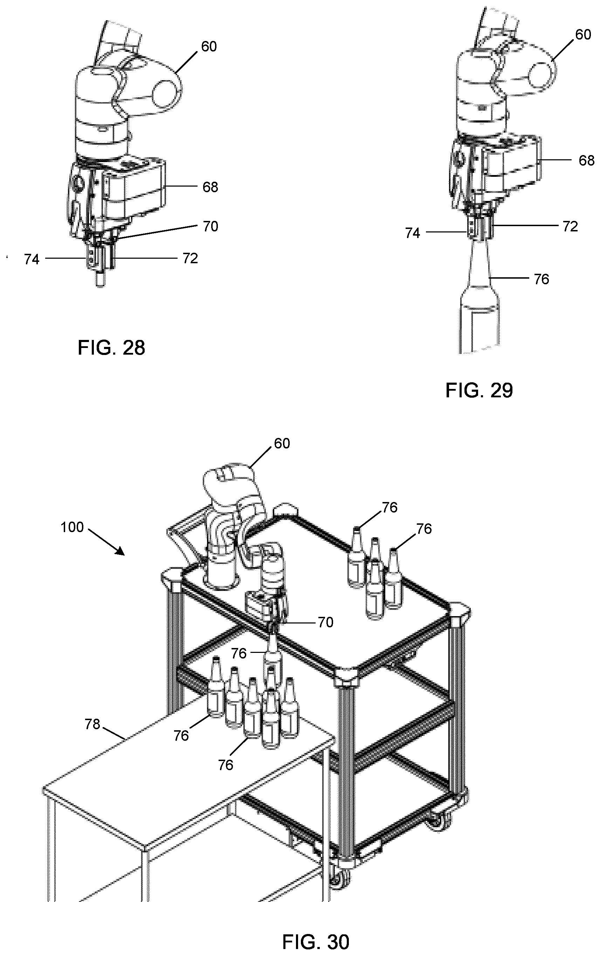

Figure 28 is an enlarged perspective view of the gripper 70. More specifically, the gripper 70 includes a first arm 72 and a second arm 74. The first 72 and second arms 74 can translate towards and away from each other, for example, in response to an instruction received from the controller 18.

Figure 29 is an enlarged perspective view of the gripper 70 grasping an object 76. The object 76 may be, for example, a bottle. However, it is contemplated by the present disclosure that the object 76 may be any type of object that can be grasped by the gripper 70 and placed on the shelf panel 13 of the cart 100.

The camera 68 may capture image data of an item desired to be transported by the cart 100. Image data of the item may be an image of the object 76 or may be a video of the object 76. Image data captured by the camera 68 is transmitted via the network 58 to the controller 18 for analysis. The controller may analyze the captured image data to determine whether or not the item matches an object 76 desired to be placed on the shelf panel 13 of the cart 100. For example, the captured image data of the item may be compared against a record image of the object 76.

After confirming that the item included in the captured image data matches an object 76 desired to be placed on and transported by the cart 100, the robotic arm 60 is manipulated to locate the gripper 70 proximate the object 76. The arms 72 and 74 are located in a manner to grasp the object 76. For example, the first 72 and second 74 arms may be located such that the object 76 is between the arms 72, 74. The arms 72 and 74 may be moved towards each other and as a result moved towards the object 76. The arms 72, 74 apply pressure and thus squeeze the object 76 to grasp the object 76.

After grasping the object 76, the robotic arm 60 is manipulated to move the second end 64 over the cart 100 and to lower the second end 64 in manner than places the object 76 on the shelf panel 13. The object 76 should be placed on the shelf panel 13 so the object 76 is not damaged. After placing the object 76 on the shelf panel 13, the arms 72 and 74 are moved away from each other and thus away from the object 76. As a result, thus the object 76 is released from the gripper 70 and the object 76 is placed automatically on the cart 100.

It is contemplated by the present disclosure that the robot arm 60 may move in six degrees of freedom and have, for example, a thirty-three inch reach. The maximum weight of the object 76 may be, for example, ten pounds, but may be as high as about fifteen pounds.

Figure 30 is a perspective view of the cart 100 including the robotic arm 60 autonomously moving objects 76 from a table 78 to the cart 100 in accordance with an embodiment of the present disclosure. The robotic arm 60 may be repeatedly manipulated to grasp and move individual objects 76 from the table 78 to the shelf panel 13. Although the objects 76 are moved from the table 78 in the examples described herein, it is contemplated by the present disclosure that the objects 76 may alternatively be positioned on and moved from any type of surface, for example, a shelf. It is contemplated by the present disclosure that the robotic delivery cart 100 does not move while the robotic arm 60 is manipulated to grasp an object 76 or is otherwise operated. The cart 100 is effectively locked in place when the robotic arm 60 is manipulated or otherwise operated.

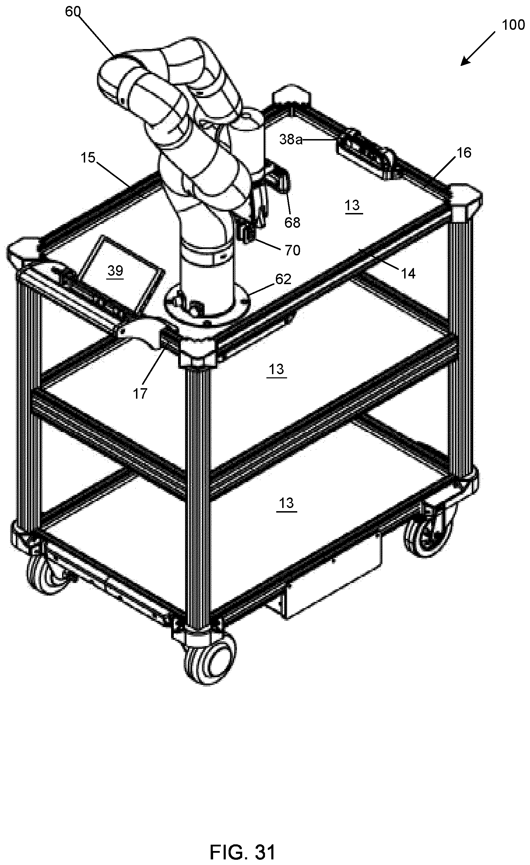

Figure 31 is another perspective view of the cart 100 with the robotic arm 60 in a retracted position, further including another image capturing device 38a. The image capturing device 38a may be the same as or similar to the image capturing device 38. The image capturing device 38a may be located on the top shelf panel 13 along the first widthwise rail 16. The image capturing device 38a may be located on the top shelf panel 13 at the same location as the image capturing device 38, but on the opposite of the top shelf panel 13. The image capturing device 38a can be oriented to face the second widthwise rail 17 so that images of the robotic arm 60 may be captured during operation of the cart 100 and during operation of the robotic arm 60.

While the cart 100 maneuvers and otherwise moves towards a location, the robotic arm 60 remains in the retracted position to facilitate minimizing the likelihood that the robotic arm 60 will collide with, for example, an obstacle or a person. An obstacle could be, for example, a bookcase which could fall over if contacted by the robotic arm 60 or the cart 100. The bookcase could be damaged as well as items in the bookcase.

The robotic delivery cart 100 does not move when the robotic arm 60 is manipulated to grasp an object 76 or is otherwise operated to facilitate minimizing the likelihood that the robotic arm 60 will collide with, for example, an obstacle or a person during operation. The image capturing device 38a may capture image data of the robotic arm 60 and the cart 100 while the cart 100 is moving and while the robotic arm 60 is operating. The captured image data may be transmitted via the network 58 to the controller 18, which may analyze the image data to determine whether or not the cart 100 or the robotic arm 60 may be on track to collide with an obstacle. In response to determining there may be a collision, the controller 18 may generate an instruction and transmit via the network 58 the instruction to the motorized wheels 26 or the robotic arm 60 to take corrective action for avoiding a collision. Thus, the robotic arm 60 may be manipulated and otherwise safely operated from the retracted state to the fully extended state, and any state in between, without colliding with any obstacles, which enhances operational safety of the robotic delivery cart 100.

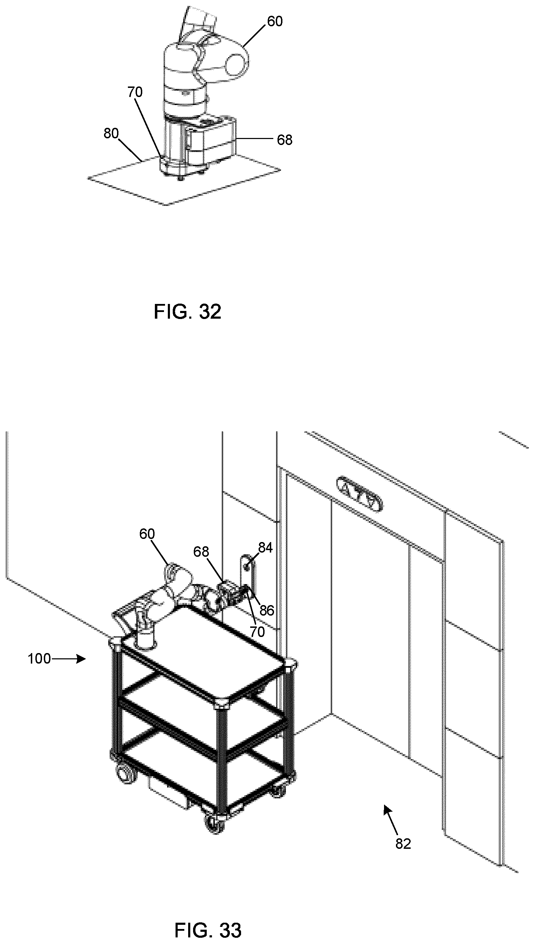

The information shown in Figure 32 includes most of the same information shown in Figure 28 as described in more detail below. As such, features illustrated in Figure 32 that are identical to features illustrated in Figure 28 are identified using the same reference numerals used in Figure 28.

Figure 32 is a perspective view of an alternative example gripper 70 similar to that shown in Figure 28. However, the gripper 70 does not include the arms 72 and 74. Rather, the gripper 70 is equipped, for example, with a vacuum suction mechanism for use in grasping an object 80. The object 80 is different than the object 76. The object 80 may be, for example, a sheet of metal or a sheet of plastic. Thus, the vacuum suction mechanism applies suction to an object 80, for example, a plastic sheet to grasp the object 80. The robotic arm 60 may move the object 80 from a location, for example, the table 78 to the shelf panel 13 in a manner similar to that described herein with regard to Figure 29 for the object 76.

Although objects 76, 80 are placed on the top shelf panel 13 of the top shelf 12 in the examples described herein, it is contemplated by the present disclosure that the objects 76, 80 may alternatively be placed on a different shelf panel 13 of the cart 100. For example, the objects 76, 80 may be placed on the shelf panel 13 of the base shelf 10 or a shelf panel 13 between the top 12 and base 10 shelves.

Figure 33 is a perspective view of the cart 100 and the robotic arm 60 located proximate an elevator 82. The robotic delivery cart 100 may receive instructions from the controller 18 to go to a different floor to collect objects for transport. After the cart 100 is maneuvered to be proximate the elevator 82 without contacting any obstacles, the camera 68 may capture image data of an up-elevator button 84 and a down elevator button 86. The captured image data may be transmitted to the controller 18 which can generate an instruction for directing the robotic arm 60 to move the gripper 70 to the location of a desired button. In this example, the desired button is the up-button 84. Alternatively, the desired button may be the down button 86.

After the gripper 70 is positioned at the location of the desired button, the robotic arm 60 is maneuvered to push the gripper 70 against the desired button to activate the desired button. In response to pressing the desired button, typically, the elevator doors open and the cart 100 can be manipulated and otherwise moved to enter the elevator 82.

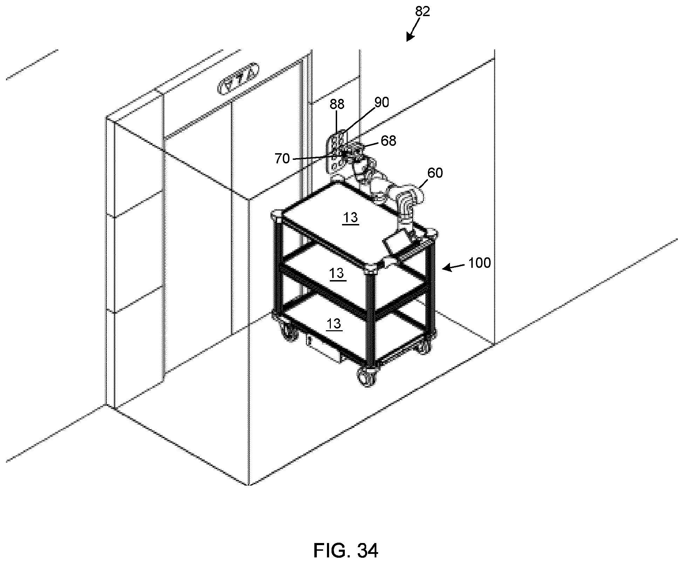

Figure 34 is a perspective view of the cart 100 located in the elevator 82 in which the robotic arm 60 is extended. After entering the elevator 82, the robotic arm 60 is maneuvered so the camera 68 can capture image data of a button console 88. Image data captured by the camera 68 is transmitted to the controller 18 which generates instructions for moving the robotic arm 60 to activate a desired button 90 in the console 88. The controller 18 transmits the instructions to the robotic arm 60 which moves to position the gripper 70 against the desired button 90, and to push and thus activate the button 90. It should be understood that the desired button 90 corresponds to a floor different the floor from which the cart 100 entered the elevator 82.

After the elevator 82 arrives at the floor corresponding to the desired button 90 and the elevator doors open, the cart 100 maneuvers and otherwise moves to exit the elevator 82. The cart 100 may maneuver and otherwise move about the desired floor without contacting potential obstacles towards an object 76 that is to be transported by the cart 100. The cart 100 may move, for example, towards the table 78 as described herein with regard to Figure 30.

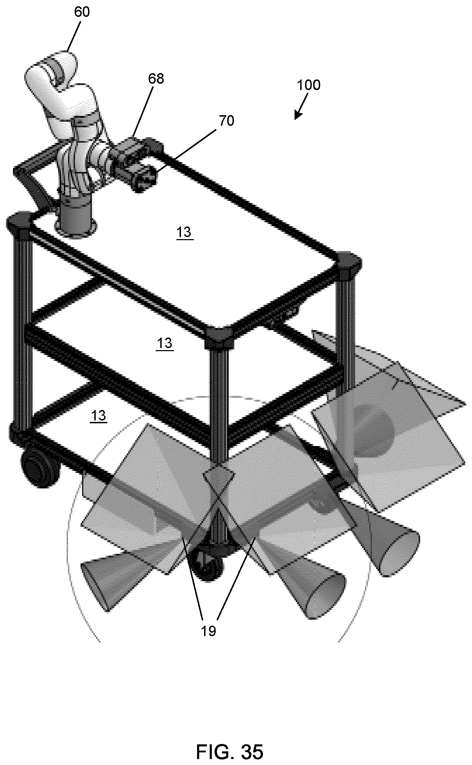

Figure 35 is a perspective view of the cart 100 including navigational sensors 19 at locations on the base shelf 10 of the cart 100. The sensors 19 may be, for example, TOF sensors and LIDAR sensors. The sensors 19 are located to enhance detection of floor level obstacles, for example, hand tools and boxes.

Autonomous robotic delivery carts have been known to suffer from inflexible, rigid designs that inhibit customization, are expensive to manufacture, and require people for loading and unloading payloads.

Known rigid robotic delivery cart designs have been known to inhibit customization which prevents modifying carts to operate outside of narrow intended use cases. Redesigning such robotic carts for different use cases and/or accommodate different payloads is typically time consuming and expensive because a whole new robotic cart is designed from scratch. Generally, manufacturing robotic carts with such inflexible and rigid designs is expensive because custom parts for the cart frame, the cart enclosure, and mounts for all the hardware that enable autonomous operation need to be manufactured. Furthermore, many components required for autonomous operation need to be integrated into the robotic cart, for example, proximity sensors, power supply, control sensors, drive systems, warning systems, and user controls.

Additionally, known robotic delivery carts require users, for example, employees to manually load payloads onto the cart and unload the payloads from the cart. Loading and unloading the payloads can be time intensive which can cause the user to delay or miss performing other more important tasks. As a result, users are known to be less efficient which increases costs and perhaps causes delayed or missed project deadlines.

In view of the above, it can be seen that known robotic delivery carts are typically programmed manually, are loaded and unloaded by users, and cannot interact with building infrastructure. As a result, known carts can be cumbersome and time consuming to operate which causes their operating costs to also increase.

To address these problems, the robotic cart 100 may obtain data regarding potential obstacles in an area surrounding the cart 100. The robotic cart 100 can be located, for example, on a floor of a building. The cart 100 can determine at least one object for loading onto the cart 100. The at least one object being at a first location on the floor of the building. The cart 100 can be maneuvered amongst the obstacles, without contacting any of the obstacles, to the first location and the robotic arm 60 may be used to load the at least one object into the cart 100. The cart 100 may be maneuvered to a second location without contacting any of the obstacles, and can unload, using the robotic arm, the at least one object at the second location.

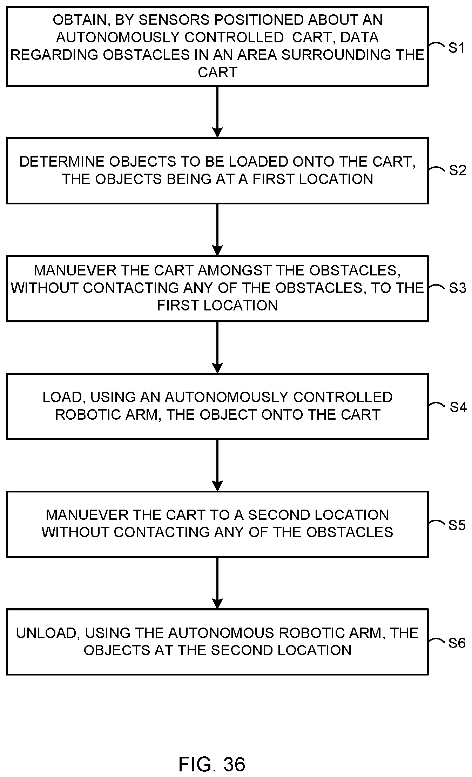

Figure 36 is a flowchart illustrating an example method and algorithm for enhancing transportation of objects using the robotic delivery cart 100 according to an embodiment of the present disclosure. This method and algorithm may be implemented, for example, in response to receiving a navigational command from a user via the user interface 39. Figure 35 illustrates example steps performed when the controller 18 of the cart 100 runs software 56 stored in the memory 48 to autonomously transport objects.

In step S1, the software 56 executed by the processor 46 causes the controller to obtain data regarding potential obstacles in an area surrounding the robotic cart 100. The cart 100 is located on the floor of a building. The controller 18 may receive a navigational command from a user, for example, via the user interface 39. Alternatively, the user may operate an electronic device (not shown) to wirelessly transmit the navigation command to the controller 18. The command may indicate one or more objects to be collected, a location for the collection, and a navigational path to traverse.

Next, in step S2, the software 56 executed the processor 46 causes the controller to determine the one or more objects 76 to be loaded onto and transported by the cart 100. The one or more objects can be at a first location on the floor of the building. In step S3, the software 56 executed by the processor 46 causes the controller to maneuver the cart 100 amongst the obstacles in accordance, without contacting any of the obstacles, to the first location.

Next, in step S4, the software 56 executed the software 46 causes the controller to instruct the robotic arm 60 to load one of the objects 76 onto the cart 100. More specifically, the camera 68 may capture image data of an item which may be transmitted via the network 58 to the controller 18 for analysis. The image data of the item may be an image of the object 76 or may be a video of the object 76.

The controller may analyze the captured image data to determine whether or not the item matches an object 76 desired to be placed on the shelf panel 13 of the cart 100. For example, the captured image data of the item may be compared against a record image of the object 76.

After confirming that the item included in the captured image data matches an object 76 desired to be transported by the cart 100, the robotic arm 60 is manipulated to locate the gripper 70 proximate the object 76. The arms 72 and 74 are located in a manner to grasp the object 76. For example, the first 72 and second 74 arms may be located such that the object 76 is between the arms 72, 74. The arms 72 and 74 may be moved towards each other and as a result moved towards the object 76. The arms 72, 74 apply pressure and thus squeeze the object 76 to grasp the object 76.

After grasping the object 76, the robotic arm 60 is manipulated to move the second end 64 over the cart 100 and to lower the second end 64 in manner than places the object 76 on the shelf panel 13. The object 76 should be placed on the shelf panel 13 so the object 76 is not damaged. After placing the object 76 on the shelf panel 13, the arms 72 and 74 are moved away from each other and thus away from the object 76. As a result, the object 76 is released from the gripper 70 and the object 76 is placed autonomously on the cart 100. It is contemplated by the present disclosure that a plurality of objects 76 may thus be moved from, for example, the table 78 to the cart 100.

Sometimes the cart 100 is positioned proximate the object 100 but the robotic arm 60 cannot reach an abject 76 to be collected. When the robotic arm cannot reach an object 76, the software 56 executed by the processor 46 causes the controller to maneuver and otherwise move such that the robotic arm 60 can reach the object 76.

**In** step S5, the software 56 executed by the processor 46 causes the controller to maneuver the cart 100 to a second location without contacting any obstacles. The controller 18 may receive another navigational command entered, for example, by the user via the user interface 39 about the second location. The second location may be on the same floor of the building on which the cart 100 is located or the second location may be, for example, on a different floor of the building.

Next, in step S6, the software 56 executed by the processor 46 causes the controller 18 to use the robotic arm 60 to unload the objects at the second location. For example, after grasping the object 76, the robotic arm 60 may be manipulated to move the second end 64 over the second location and to lower the second end 64 in manner that places the object 76 on a surface at the second location. The object 76 should be placed on the surface so the object 76 is not damaged. After placing the object 76 on the surface, the arms 72 and 74 are moved away from each other and thus away from the object 76. As a result, the object 76 is released from the gripper 70 and the object 76 is placed autonomously on the surface.

It is contemplated by the present disclosure that the one or more objects 76 may include more than one type of object 76. For example, the objects 76 may include bottles and tape dispensers. Moreover, it is contemplated by the present disclosure that the different types of objects may be at different locations on the same or different floors of the building. When the objects 76 are at different locations on the same or different floors, the navigational command includes a corresponding navigational path.

Sometimes an error may occur while loading or unloading the one or more objects 76. For example, the gripper 70 may drop an object 76 on the floor or an object 76 may be improperly placed on the cart 100. When an error occurs, the software 56 executed by the processor 46 causes the controller 18 to determine an error has occurred and to transmit via the network 58 a message to an electronic device (not shown) indicating that an error has occurred. The electronic device can display the message or can emit an audio alarm upon receiving the message for a person to read the message or to notify the person that a message is available for review. The electronic device should be associated with a person who may be responsible for addressing errors. The electronic device (not shown) may be, for example, a smart phone, tablet computer, laptop computer or a personal computer (PC).

The method and algorithm for enhancing transportation of objects using the robotic delivery cart 100 described herein facilitates reducing the time, inconvenience and related costs of manually loading and unloading robotic delivery carts.

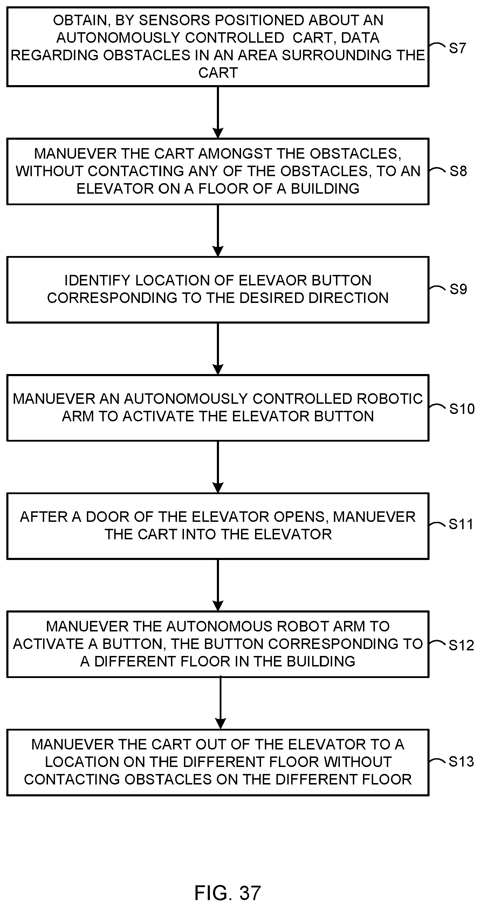

Figure 37 is a flowchart illustrating an example method and algorithm for operating an elevator with the cart 100 according to an embodiment of the present disclosure. This example method and algorithm may be implemented, for example, after the controller 18 receives an instruction to go to a different floor to collect objects for transport. Figure 36 illustrates example steps performed when the controller 18 of the cart 100 runs software 56 stored in the memory 48 to cause the cart 100 to operate an elevator, for example, the elevator 82.

In step S7, the software 56 executed by the processor 46 causes the controller 18 to obtain data regarding potential obstacles in an area surrounding the robotic cart 100. The cart may be located on the floor of a building. In step S8, the software 56 executed by the processor 46 causes the controller 18 to maneuver the cart 100 amongst obstacles, without contacting any of the obstacles to be proximate an elevator on the floor of the building. The elevator may be in a bank of elevators. If the elevator is being used, for example, by movers for a prolonged period of time another navigational path may be generated to reroute the cart 100. For example, the other navigational path may instruct the cart 100 to move to another elevator in the bank of elevators.

Next, in step S9, the software 56 executed by the processor 46 causes the controller to determine the location of a button corresponding to a desired floor. More specifically, the camera 68 captures image data of the elevator buttons and transmits the captured image data to the controller 18. The controller 18 generates an instruction for directing the robotic arm 60 to move the gripper 70 to a location of the desired button.

In step S10, the software 56 executed by the processor 46 causes the controller 18 to maneuver the robotic arm 60 to push and thus activate the elevator button. After an elevator door opens, in step S11, the software 56 executed by the processor 46 causes the controller 18 to maneuver and otherwise move the cart 100 to enter the elevator.

In step S12, the software 56 executed by the processor 46 causes the controller 18 to maneuver the robotic arm 60 to activate a button corresponding to a different floor in the building. For example, after entering the elevator 82, the robotic arm 60 is maneuvered so the camera 68 can capture image data of a button console 88. Image data captured by the camera 68 is transmitted to the controller 18 which generates instructions for moving the robotic arm 60 to activate a desired button 90 in the console 88. The controller 18 transmits the instructions to the robotic arm 60 which moves to position the gripper 70 against the desired button 90, and to push and thus activate the button 90. It should be understood that the desired button 90 corresponds to a floor different the floor from which the cart 100 entered the elevator 82.

Next, in step S13, the software 56 executed by the processor 46 causes the controller 18 to maneuver the cart 100 out of the elevator to a location on the different floor without contacting potential obstacles on the different floor.

Elevator 82 may include an elevator controller. The elevator controller may include, for example, a processor, a memory, a user interface and a communications interface similar to those described herein for the controller 18. The elevator may thus communicate via the network 58.

Although the example method and algorithm for operating an elevator with the cart 100 requires pushing the elevator buttons with the robotic arm 60 to activate the buttons, it is contemplated by the present disclosure that the controller 18 may alternatively, or additionally, communicate via the network 58 with the elevator controller to activate the elevator 82. For example, as the cart 100 approaches the elevator 82, the controller 18 may transmit via the network 58 a message to the elevator controller indicating the cart 100 would like to enter the elevator 82 and go to a desired floor in the building. When the cart 100 is within a certain distance of the elevator 82, the elevator door may automatically open without pushing any buttons. The certain distance may be, for example, within the range of about five to ten feet.

After the cart 100 maneuvers into the elevator 82, the elevator controller may operate the elevator 82 to go the floor desired by the cart 100. Upon arriving at the desired floor, the elevator controller may cause the elevator doors to open. Thus, the cart 100 may operate the elevator 82 without pressing buttons.

The method and algorithm for the cart 100 to interact with an elevator facilitate reducing the time, inconvenience and related costs of manually moving robotic delivery carts.

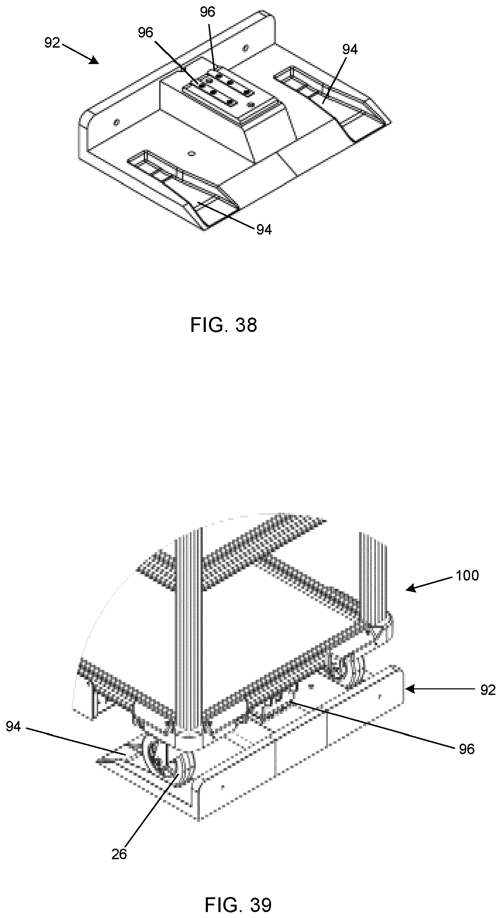

Figure 38 is a perspective view of an example electric charging station 92 for charging the internal battery of the robotic delivery cart 100. The charging station 92 includes two channels 94 that may have, for example, a C-shaped or U-shaped cross-section. The channels are parallel to each other. The charging station 92 also includes two elongated electrical contacts 96 for contacting counterpart electrical contacts (not shown) on a bottom of the cart 100. It is contemplated by the present disclosure that the electrical contacts may be metal, for example, copper.

Figure 39 is a perspective view of the charging station 92 with the wheels 26 positioned in respective channels 94. Each of the elongated copper contacts 96 contacts a counterpart elongated contact on the bottom of the cart 100 so current can flow from the charging station 92 to the internal battery of the cart 100. Thus, the internal battery of the cart 100 may be easily, quickly and conveniently recharged.

It is contemplated by the present disclosure that the example methods and algorithms described herein may be conducted entirely by the controller 18 or partly by the controller 18 and partly by an electronic device (not shown). Furthermore, data described herein as being stored in the controller 18 may alternatively, or additionally, be stored in any other server (not shown), electronic device (not shown), or computer (not shown) operable to communicate with the controller 18 via the network 58.

Additionally, the example methods and algorithms described herein may be implemented with any number and organization of computer program components. Thus, the methods and algorithms described herein are not limited to specific computer-executable instructions. Alternative example methods and algorithms may include different computer-executable instructions or components having more or less functionality than described herein.

The example methods and/or algorithms described above should not be considered to imply a fixed order for performing the method and/or algorithm steps. Rather, the method and/or algorithm steps may be performed in any order that is practicable, including simultaneous performance of at least some steps. Moreover, the method and/or algorithm steps may be performed in real time or in near real time. It should be understood that for any method and/or algorithm described herein, there can be additional, fewer, or alternative steps performed in similar or alternative orders, or in parallel, within the scope of the various embodiments, unless otherwise stated. Furthermore, the invention is not limited to the embodiments of the methods and/or algorithms described above in detail.

## Claims

1. A method for transporting objects using a robotic cart comprising the steps of:
obtaining, by a controller, data regarding potential obstacles in an area surrounding a robotic cart, the robotic cart being located on a floor of a building;
determining at least one object to be loaded onto the cart, the at least one object being at a first location on the floor of the building;
maneuvering the cart amongst the obstacles, without contacting any of the obstacles, to the first location;
loading, using a robotic arm, the at least one object onto the cart;
maneuvering the cart to a second location without contacting any of the obstacles; and
unloading, using the robotic arm, the at least one object at the second location.

2. The method according to claim 1, said maneuvering the cart to a second location step comprising:
maneuvering the cart to an elevator on the floor of the building without contacting any of the obstacles;
determining a location of an elevator button corresponding to a desired direction;
maneuvering the robotic arm to activate the button;
after a door of the elevator opens, maneuvering the cart into the elevator;
maneuvering the robotic arm to activate a button inside the elevator, the button inside the elevator corresponding to a different floor of the building; and
maneuvering the cart out of the elevator to the second location on the different floor without contacting potential obstacles on the different floor.

3. The method according to claim 1 or 2, wherein the robotic arm includes a camera, said method further comprising:
capturing, by the camera, image data of at least one item proximate the first location; and
analyzing the captured image data to determine whether the at least one item matches the at least one object.

4. The method according to claim 3, wherein the robotic arm includes a gripper, said loading step further comprising:
determining that the at least one item matches the at least one object;
maneuvering the robotic arm to locate the gripper proximate the at least one object;
grasping, by the gripper, the at least one object;
maneuvering the robotic arm to locate the at least one object on the cart; and
releasing, by the gripper, the at least one object to place the at least one object on the cart.

5. The method according to claim 4, said maneuvering the robotic arm to locate the gripper comprising:
determining, by the camera, location data of the at least one object;
using the location data of the at least one object to manipulate the gripper to the location; and
instructing the gripper to grasp the at least one object.

6. The method according to any preceding claim, wherein:
the robotic cart comprises at least a top shelf; and
the robotic arm is mounted on the top shelf to optimize a reach of the robotic arm as well as locations for retrieving the at least one object.

7. The method according to any preceding claim, said obtaining step comprising receiving data regarding locations of potential obstacles from a plurality of sensors positioned on the robotic cart, wherein the sensors include at least one of time-of-flight sensors, light detecting and ranging sensors, and environmental sensors.

8. The method according to any preceding claim, said maneuvering the cart to a first location step comprising
determining a navigational path to the first location; and
changing the navigational path in response to detecting an obstacle in the determined navigational path, the changed navigational path designed to avoid the detected obstacle and provide instructions to the first location.

9. The method according to any preceding claim, wherein the second location is on the floor or a different floor of the building.

10. The method according to any preceding claim, wherein the at least one object includes different type of objects, the different types of objects being at the first location and other locations in the building, said loading step comprising loading, using the robotic arm, the different type of objects onto the cart.

11. The method according to any preceding claim, further comprising:
determining an error occurred during at least one of said loading and unloading steps; and
transmitting, by the controller, a message to an electronic device indicating an error has occurred, the electronic device being associated with a person who can address the error.

12. The method according to any preceding claim, further comprising:
determining a navigational path for the robotic cart; and
changing the navigational path when an event occurs that prevents the robotic cart from traversing the path.

13. A robotic cart for transporting objects comprising:
a processor; and
a memory configured to store data, said robotic cart being associated with a network and said memory being in communication with said processor and having instructions stored thereon which, when read and executed by said processor, cause said robotic cart to carry out the method of any preceding claim.
